(19) Europäisches Patentamt
European Patent Office
Office européen des brevets

(11) EP 4 654 729 A1

(12) EUROPEAN PATENT APPLICATION
published in accordance with Art. 153(4) EPC

(43) Date of publication:
26.11.2025 Bulletin 2025/48

(51) International Patent Classification (IPC):
H04W 74/08 (2024.01)    H04W 56/00 (2009.01)
H04W 72/25 (2023.01)

(21) Application number: 23948039.5

(22) Date of filing: 10.08.2023

(52) Cooperative Patent Classification (CPC):
H04W 52/367; H04W 74/0808; H04W 52/281;
H04W 72/0453; H04W 72/25; H04W 92/18

(86) International application number:
PCT/CN2023/112158

(87) International publication number:
WO 2025/030464 (13.02.2025 Gazette 2025/07)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: GUANGDONG OPPO MOBILE
TELECOMMUNICATIONS
CORP., LTD.
Dongguan, Guangdong 523860 (CN)

(72) Inventors:
• MA, Teng
  Dongguan, Guangdong 523860 (CN)
• ZHAO, Zhenshan
  Dongguan, Guangdong 523860 (CN)
• ZHANG, Shichang
  Dongguan, Guangdong 523860 (CN)

(74) Representative: RGTH
Patentanwälte PartGmbB
Neuer Wall 10
20354 Hamburg (DE)

(54) **WIRELESS COMMUNICATION METHOD, TERMINAL DEVICE, AND NETWORK DEVICE**

(57) This application provides a wireless communication method, a terminal device, and a network device. The wireless communication method includes: in a case that a terminal device fails to perform listen-before-talk LBT in some or all of resource block RB sets in a first sidelink synchronization signal block S-SSB slot, performing, by the terminal device, a first operation. In this application, the behavior (that is, the first operation) to be performed by the terminal device in a case in which the terminal device fails to perform LBT in some or all of RB sets in the first S-SSB slot is defined, which may therefore be conducive to avoiding synchronization anomalies between the terminal device and other devices to some extent.

FIG. 21

**Description**

**TECHNICAL FIELD**

This application relates to the field of communications technologies, and more specifically, to a wireless communication method, a terminal device, and a network device.

**BACKGROUND**

In a case that a terminal device successfully performs listen-before-talk (listen-before-talk, LBT) in a sidelink synchronization signal block (sidelink synchronization signal block, S-SSB) slot (slot), the terminal device may map and transmit an S-SSB in the S-SSB slot. However, in a case in which LBT fails to be performed in some or all of resource block (resource block, RB) sets (set) in an S-SSB slot, an operation to be performed by the terminal device is not yet clear, which may affect synchronization performance of the terminal device on a sidelink, thus resulting in a failure in synchronization between the terminal device and other terminal devices.

**SUMMARY**

This application provides a wireless communication method, a terminal device, and a network device. The following describes the aspects related to this application.

According to a first aspect, a wireless communication method is provided. The wireless communication method includes: in a case that a terminal device fails to perform listen-before-talk LBT in some or all of resource block RB sets in a first S-SSB slot, performing, by the terminal device, a first operation.

According to a second aspect, a wireless communication method is provided. The wireless communication method includes: transmitting, by a network device, configuration information to a terminal device, where the configuration information is used to configure one or more of following information: first information, used to indicate a frequency domain location of a target resource block RB set, where the target RB set is an RB set, in which the terminal device preferentially performs listen-before-talk LBT, in an S-SSB slot; a first interval, used to indicate an interval between first type of S-SSB slots; a second interval, used to indicate an interval between a first type of S-SSB slot and a second type of S-SSB slot, and the second type of S-SSB slot is a supplementary candidate slot for the first type of S-SSB slot; or a third interval, used to indicate an interval between a plurality of second type of S-SSB slots corresponding to a same first type of S-SSB slot.

According to a third aspect, a terminal device is provided. The terminal device includes: an execution unit, configured to: in a case that a terminal device fails to perform listen-before-talk LBT in some or all of resource block RB sets in a first S-SSB slot, perform a first operation.

According to a fourth aspect, a network device is provided. The network device includes: a transmitting unit, configured to transmit configuration information to a terminal device, where the configuration information is used to configure one or more of following information: first information, used to indicate a frequency domain location of a target resource block RB set, where the target RB set is an RB set, in which the terminal device preferentially performs listen-before-talk LBT, in an S-SSB slot; a first interval, used to indicate an interval between first type of S-SSB slots; a second interval, used to indicate an interval between a first type of S-SSB slot and a second type of S-SSB slot, and the second type of S-SSB slot is a supplementary candidate slot for the first type of S-SSB slot; or a third interval, used to indicate an interval between a plurality of second type of S-SSB slots corresponding to a same first type of S-SSB slot.

According to a fifth aspect, a terminal device is provided, and includes a processor and a memory. The memory is configured to store one or more computer programs, and the processor is configured to invoke a computer program in the memory to cause the terminal device to perform some or all of the steps in the method according to the first aspect.

According to a sixth aspect, a network device is provided, and includes a processor, a memory, and a transceiver. The memory is configured to store one or more computer programs. The processor is configured to invoke a computer program in the memory to cause the network device to perform some or all of the steps in the method according to the second aspect.

According to a seventh aspect, an embodiment of this application provides a communications system, where the system includes the foregoing terminal device and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program, and the computer program causes a terminal device and/or a network device to perform some or all of the steps in the method according to the foregoing aspects.

According to a ninth aspect, an embodiment of this application provides a computer program product. The computer program product includes a non-transitory computer-readable storage medium storing a computer program, and the computer program is operable to cause a terminal device and/or a network device to perform some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

In this application, the behavior (that is, the first operation) to be performed by the terminal device in a case in which the terminal device fails to perform LBT in some or all of RB sets in a first S-SSB slot is defined, thereby avoiding synchronization performance anomalies between the terminal device and other devices to some extent.

## BRIEF DESCRIPTION OF DRAWINGS

FIG. 1 is an example diagram of a system architecture of a wireless communications system to which embodiments of this application are applicable.

FIG. 2 is an example diagram of a scenario of sidelink communication within network coverage.

FIG. 3 is an example diagram of a scenario of sidelink communication within partial network coverage.

FIG. 4 is an example diagram of a scenario of sidelink communication outside network coverage.

FIG. 5 is an example diagram of a scenario of sidelink communication with a central control node.

FIG. 6 is an example diagram of a broadcast-based sidelink communication mode.

FIG. 7 is an example diagram of a unicast-based sidelink communication mode.

FIG. 8 is an example diagram of a multicast-based sidelink communication mode.

FIG. 9 is an example diagram of a slot structure of some sidelink communication systems (such as an NR-V2X system).

FIG. 10 is an example diagram of variation of available OFDM symbols for a PSSCH in different slots.

FIG. 11 is an example diagram of a time-frequency resource occupied by second-stage SCI in a slot.

FIG. 12 is a schematic diagram of a DMRS pattern for a PSCCH.

FIG. 13 is a schematic diagram of time domain locations of four DMRS symbols of a PSSCH when the PSSCH includes 14 symbols.

FIG. 14 is an example diagram of a single-symbol DMRS frequency domain type 1.

FIG. 15 is an example diagram of a time-frequency location of an SL CSI-RS.

FIG. 16 is an example diagram of a channel occupancy time obtained by a communications device after successfully performing LBT on a channel of unlicensed spectrum and signal transmission performed using resources within the channel occupancy time.

FIG. 17 is an example diagram of COT sharing.

FIG. 18 is an example diagram of frequency domain resource allocation for a sidelink in grant-free spectrum.

FIG. 19A is an example diagram of S-SSB time domain resource configuration.

FIG. 19B is an example diagram of a time-frequency structure of an S-SSB.

FIG. 20 is an example diagram of S-SSB mapping.

FIG. 21 is a schematic flowchart of a wireless communication method according to an embodiment of this application.

FIG. 22 is an example diagram of a wireless communication method according to an embodiment of this application.

FIG. 23 is an example diagram of another wireless communication method according to an embodiment of this application.

FIG. 24 is an example diagram of another wireless communication method according to an embodiment of this application.

FIG. 25 is an example diagram of another wireless communication method according to an embodiment of this application.

FIG. 26A is a schematic diagram of arrangement of first type of S-SSB slots and second type of S-SSB slots according to an embodiment of this application.

FIG. 26B is a schematic diagram of another arrangement of first type of S-SSB slots and second type of S-SSB slots according to an embodiment of this application.

FIG. 26C is a schematic diagram of another arrangement of first type of S-SSB slots and second type of S-SSB slots according to an embodiment of this application.

FIG. 27 is an example diagram of another wireless communication method according to an embodiment of this application.

FIG. 28 is an example diagram of another wireless communication method according to an embodiment of this application.

FIG. 29 is an example diagram of another wireless communication method according to an embodiment of this application.

FIG. 30 is an example diagram of another wireless communication method according to an embodiment of this application.

FIG. 31 is an example diagram of another wireless communication method according to an embodiment of this application.

FIG. 32 is a schematic structural diagram of a terminal device according to an embodiment of this application.

FIG. 33 is a schematic structural diagram of a network device according to an embodiment of this application.

FIG. 34 is a schematic structural diagram of an apparatus for communication according to an embodiment of this application.

## DESCRIPTION OF EMBODIMENTS

The technical solutions in this application are described below with reference to the accompanying drawings.

## Communications system

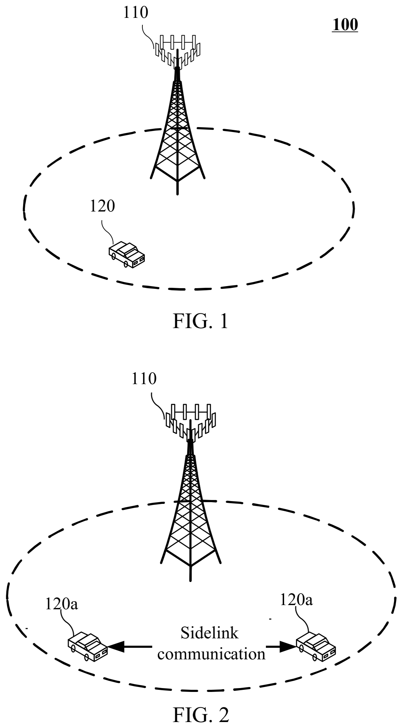

FIG. 1 is an example diagram of a system architecture of a wireless communications system 100 to which an embodiment of this application is applicable. The wireless communications system 100 may include a network device 110 and terminal devices 120. The network device 110 may be a device that communicates with the terminal device 120. The network device 110 may provide communication coverage for a specific geographic area, and may communicate with the terminal device 120 located within the coverage.

Optionally, the wireless communications system 100 may include a plurality of network devices, and another quantity of terminal devices may be included within coverage of each network device, which is not limited in embodiments of this application.

Optionally, the wireless communications system 100 may further include other network entities such as a network controller and a mobility management entity, which is not limited in embodiments of this application.

It should be understood that the technical solutions of embodiments of this application may be applied to various communications systems, such as a 5th generation (5th generation, 5G) system or new radio (new radio, NR), a long-term evolution (long term evolution, LTE) system, an LTE frequency division duplex (frequency division duplex, FDD) system, and LTE time division duplex (time division duplex, TDD). The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may function as a base station. For example, the terminal device may serve as a scheduling entity that provides a sidelink signal between terminal devices in vehicle-to-everything (vehicle-to-everything, V2X), device-to-device (device-to-device, D2D) communications, or the like. For example, a cellular phone and a vehicle communicate with each other through a sidelink signal. A cellular phone and a smart home device communicate with each other, without relaying a communication signal through a base station. Optionally, the terminal device may function as a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover various names in the following, or may be replaced with a name in the following, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary MeNB, a secondary SeNB, a multi-standard radio (MSR) node, a home base station, a network controller, an access node, a wireless node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), a positioning node, or the like. The base station may be a macro base station, a micro base station, a relay node, a donor node, or the like, or a combination thereof. Alternatively, the base station may be a communications module, a modem, or a chip disposed in the device or the apparatus described above. Alternatively, the base station may be a mobile switching center, a device that functions as a base station in device-to-device (device-to-device, D2D), vehicle-to-vehicle (vehicle-to-vehicle, V2V), vehicle-to-everything (vehicle-to-everything, V2X), and machine-to-machine (machine-to-machine, M2M) communications, a network-side device in a 6G network, a device that functions as a base station in a future communications system, or the like. The base station may support networks with a same access technology or different access technologies. A specific technology and a specific device used by the network device are not limited in embodiments of this application.

The base station may be stationary or mobile. For example, a helicopter or an unmanned aerial vehicle may be configured to function as a mobile base station, and one or more cells may move according to a location of the mobile base station. In other examples, a helicopter or an unmanned aerial vehicle may be configured to function as a device that communicates with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of a communications device in this application may also be implemented by software functions running on hardware, or by virtualization functions instantiated on a platform (for example, a cloud platform).

## Sidelink communication in different network coverage statuses

Sidelink communication (or sidelink transmission) means a communication technology based on a sidelink (sidelink, SL). Sidelink communication may be, for example, D2D or V2X. Sidelink communication supports direct transmission of communication data between a terminal device and a terminal device. Direct transmission of the communication data between the terminal device and the terminal device may have higher spectral efficiency and a lower transmission delay. For example, an internet of vehicles system uses a sidelink communication technology.

In sidelink communication, sidelink communication may be classified, depending on a network coverage status of the terminal device, into sidelink communication within network coverage, sidelink communication within partial network coverage, sidelink communication outside network coverage, and sidelink communication performed a central control node.

FIG. 2 is an example diagram of a scenario of sidelink communication within network coverage. In the scenario shown in FIG. 2, two terminal devices 120a are both located within coverage of a network device 110. Therefore, both the two terminal devices 120a may receive configuration signalling (where the configuration signalling in this application may alternatively be replaced with configuration information) from the network device 110, and determine a sidelink configuration based on the configuration signalling from the network device 110. After performing sidelink configuration, both the two terminal devices 120a may perform sidelink communication on a sidelink.

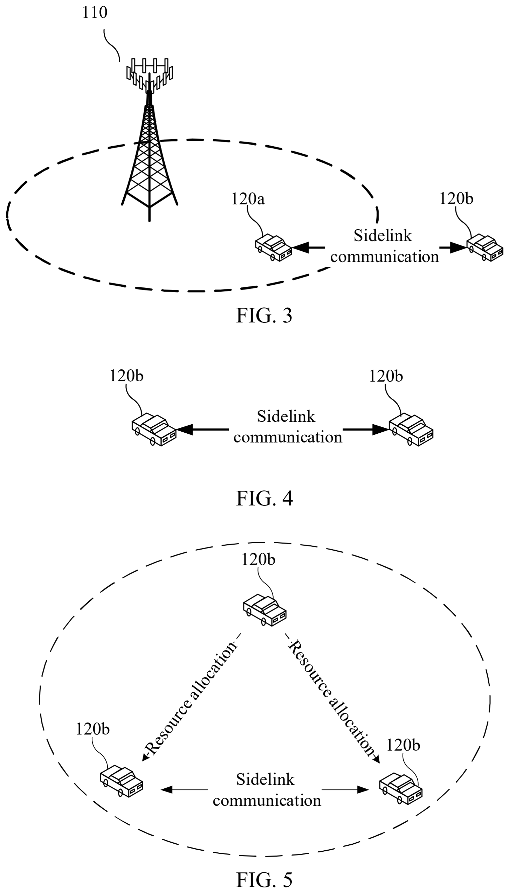

FIG. 3 is an example diagram of a scenario of sidelink communication within partial network coverage. In the scenario shown in FIG. 3, a terminal device 120a performs sidelink communication with a terminal device 120b. The terminal device 120a is located within coverage of a network device 110. Therefore, the terminal device 120a can receive configuration signalling from the network device 110, and determine a sidelink configuration based on the configuration signalling from the network device 110. The terminal device 120b is located outside the network coverage, and cannot receive configuration signalling from the network device 110. In this case, the terminal device 120b may determine a sidelink configuration based on pre-configuration (pre-configuration) information and/or information that is carried on a physical sidelink broadcast channel (physical sidelink broadcast channel, PSBCH) transmitted by the terminal device 120a located within the network coverage. After performing sidelink configuration, both the terminal device 120a and the terminal device 120b may perform sidelink communication on a sidelink.

FIG. 4 is an example diagram of a scenario of sidelink communication outside network coverage. In the scenario shown in FIG. 4, two terminal devices 120b are both located outside network coverage. In this case, both the two terminal devices 120b may determine a sidelink configuration based on pre-configuration information. After performing sidelink configuration, both the two terminal devices 120b may perform sidelink communication on a sidelink.

FIG. 5 is an example diagram of a scenario of sidelink communication associated with a central control node. In the scenario shown in FIG. 5, a plurality of terminal devices 120b may form a communication group. A central control node may be provided in the communication group. In some cases, the central control node may serve as a cluster header (cluster header, CH) terminal device. The central control node may have one or more of following functions: being responsible for establishing the communication group; adding or deleting a group member; resource coordination, allocation of sidelink transmission resources to another terminal device, and reception of sidelink feedback information from the another terminal device; resource coordination with another communication group; and other functions.

**Mode of sidelink communication**

Two modes (or referred to as transmission modes) of sidelink communication are defined in some standards or protocols (for example, 3rd Generation Partnership Project (3rd generation partnership project, 3GPP)): a first mode and a second mode.

In the first mode, a resource (the resource mentioned in this application may also be referred to as a transmission resource, or a time-frequency resource) for a terminal device is allocated by a network device. The terminal device may transmit data on a sidelink by using the resource allocated by the network device. The network device may allocate a resource for single transmission to the terminal device, or may allocate a resource for semi-static transmission to the terminal device. The first mode may be applied to a scenario in which a terminal device is located in coverage of the network device, for example, the scenario shown in FIG. 2 above. In the scenario shown in FIG. 2, the terminal device 120a is located within the coverage of the network device 110. Therefore, the network device 110 may allocate, to the terminal device 120a, a resource used in a sidelink transmission process.

In the second mode, the terminal device may independently select one or more resources from a resource pool (resource pool, RP). Then, the terminal device may perform sidelink transmission by using the selected resource. For example, in the scenario shown in FIG. 4, the terminal device 120b is located outside the cell coverage. Therefore, the terminal device 120b may independently select a resource from a pre-configured resource pool to perform sidelink transmission. Alternatively, in the scenario shown in FIG. 2, the terminal device 120a may independently select one or more resources from a resource pool configured by the network device 110, to perform sidelink transmission.

**Data transmission modes of sidelink communication**

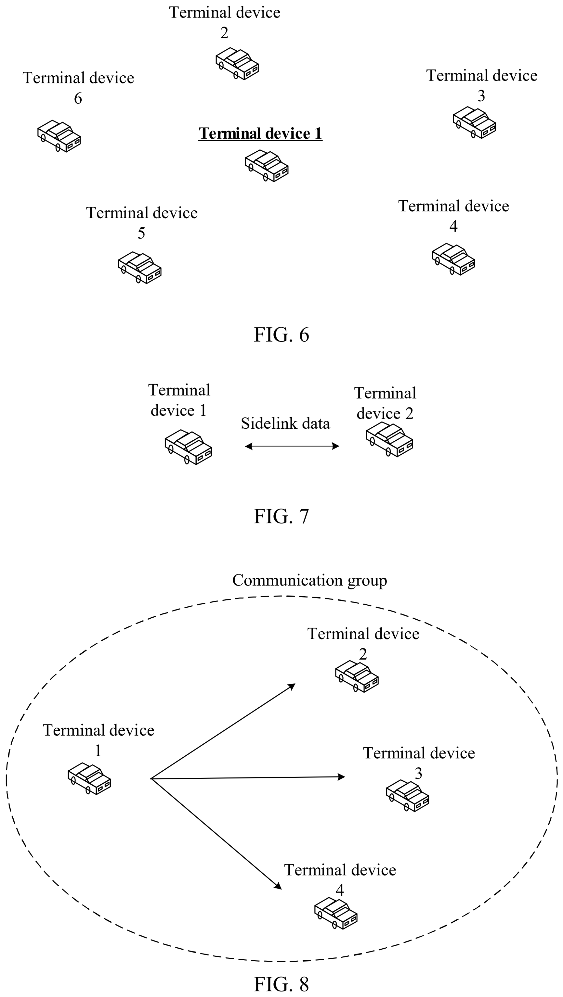

Some sidelink communication systems (for example, LTE-V2X) support a broadcast-based data transmission mode (referred to as broadcast transmission for short). For the broadcast transmission, a receiving-end terminal device may be any terminal device around a transmit-end terminal device. For example, in FIG. 6, a terminal device 1 is a transmitting-end terminal device, and a receiving-end terminal device corresponding to the transmitting-end terminal device is any terminal device around the terminal device 1, for example, may be any of terminal devices 2 to 6 in FIG. 6.

In addition to the broadcast transmission, some communications systems also support a unicast-based data transmission mode (referred to as unicast transmission for short) and/or a multicast-based data transmission mode (referred to as multicast transmission for short). For example, NR-V2X expects to support autonomous driving. Autonomous driving poses higher requirements for data interaction between vehicles. For example, data interaction between vehicles requires a higher throughput, a lower delay, higher reliability, larger coverage, a more flexible resource allocation manner, and the like. Therefore, to improve performance of data interaction between vehicles, NR-V2X introduces unicast transmission and multicast transmission.

For the unicast transmission, the receiving-end terminal device generally includes only one terminal device. For example, in FIG. 7, unicast transmission is performed between a terminal device 1 and a terminal device 2. The terminal device 1 may be a transmitting-end terminal device, and the terminal device 2 may be a receiving-end terminal device. Alternatively, the terminal device 1 may be a receiving-end terminal device, and the terminal device 2 may be a transmitting-end terminal device.

For the multicast transmission, the receiving-end terminal device may be terminal devices in a communication group (group), or the receiving-end terminal device may be terminal devices within a specific transmission distance. For example, in FIG. 7, a terminal device 1, a terminal device 2, a terminal device 3, and a terminal device 4 constitute a communication group. If the terminal device 1 transmits data, all the other terminal devices (the terminal device 2 to the terminal device 4) in the group may be receiving-end terminal devices.

**Frame structure of a sidelink communication system**

A slot may include a physical sidelink control channel (physical sidelink control channel, PSCCH), a physical sidelink shared channel (physical sidelink shared channel, PSSCH), a physical sidelink feedback channel (physical sidelink feedback channel, PSFCH), and other channels. The foregoing channels are described in detail below, and details are not described here.

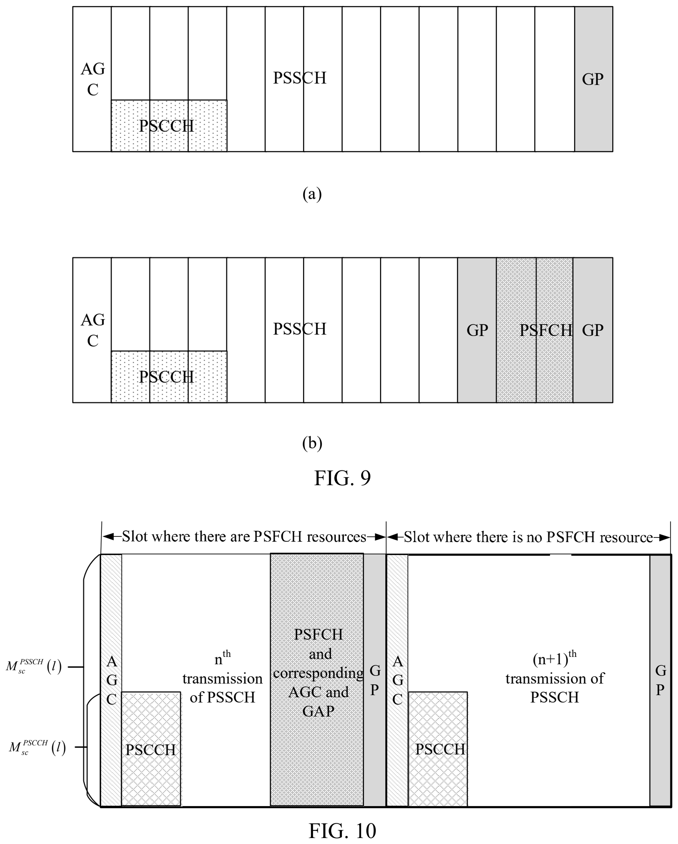

FIG. 9 is an example diagram of a slot structure of some sidelink communication systems (such as an NR-V2X system). FIG. 9(a) is an example diagram of a slot structure excluding a physical sidelink feedback channel (physical sidelink feedback channel, PSFCH). FIG. 9(b) is an example diagram of a slot structure including a PSFCH.

As shown in FIG. 9, a PSCCH may occupy two or three orthogonal frequency division multiplexing (orthogonal frequency division multiplexing, OFDM) symbols in time domain starting from the second sidelink symbol in the slot, and may occupy {10, 12 15, 20, 25} physical resource blocks (physical resource block, PRB) in frequency domain. To reduce complexity of blind detection performed by a terminal device on the PSCCH, only a quantity of symbols and a quantity of PRBs for the PSCCH may be allowed to be configured in one resource pool. In addition, since a sub-channel is a minimum granularity for PSSCH resource allocation in some sidelink communication systems (such as an NR-V2X system), a quantity of PRBs occupied by the PSCCH is required to be less than or equal to a quantity of PRBs included in one sub-channel in the resource pool, to avoid additional limitations on PSSCH resource selection or allocation.

In time domain, the PSSCH may start from the second sidelink symbol in the slot. The last time domain symbol in the slot is a guard period (guard period, GP) symbol (which may also be referred to as a gap (GAP) symbol), and remaining symbols may be mapped to the PSSCH. The first sidelink symbol in the slot may be a repetition of the second sidelink symbol. A receiving-end terminal device may use the first sidelink symbol as an automatic gain control (automatic gain control, AGC) symbol, and data on the symbol is generally not used for data demodulation. As shown in FIG. 9(a), the PSSCH may occupy K sub-channels in frequency domain, and each sub-channel may include N consecutive PRBs, where K may be an integer greater than 0, and N may be an integer greater than 0.

In FIG. 9(b), when the slot includes a PSFCH, the last-but-one symbol and the last-but-two symbol in the slot are used for transmission of the PSFCH, and a time domain symbol before the PSFCH may serve as a GP symbol.

## PSSCH

In some sidelink communication systems (such as an NR-V2X system), the PSSCH may be used to carry second-stage sidelink control information (sidelink control information, SCI). The second-stage SCI may include SCI 2-A or SCI 2-B. A polar coding method may be used for the second-stage SCI. QPSK modulation may be always used for the second-stage SCI. Low density parity check code (low density parity check, LDPC) may be used for a data portion of the PSSCH. A maximum modulation order that can be supported by the data portion of the PSSCH is 256 QAM.

In some sidelink communication systems (such as an NR-V2X system), the PSSCH supports transmission of at most two streams, and maps, by using a unitary precoding matrix, data on two layers to two antenna ports. At most one TB can be transmitted on a single PSSCH. However, different from a transmission method for the data portion of the PSSCH, when a dual-stream transmission method is used for the PSSCH, modulation symbols of the second-stage SCI transmitted in the two streams are exactly the same, thereby ensuring reception performance of the second-stage SCI on highly correlated channels.

In some sidelink communication systems (such as an NR-V2X system), a maximum quantity of retransmissions for the PSSCH is 32. If there are PSFCH resources in the resource pool, and a configuration period of the PSFCH resources is 2 or 4, available OFDM symbols in a slot may vary depending on different transmissions of the same PSSCH. FIG. 10 is an example diagram of variation of available OFDM symbols for a PSSCH in different slots. As shown in FIG. 10, since there are PSFCH resources, a quantity of available OFDM symbols for the $n^{th}$ PSSCH transmission is different from a quantity of available OFDM symbols for the $(n+1)^{th}$ PSSCH transmission. If a quantity ($N_{symbol}^{PSSCH}$) of symbols for PSSCH transmission is calculated according to an actual quantity of OFDM symbols in a slot, $Q'_{SCI2}$ may vary due to that a quantity of symbols available for PSSCH transmission in a slot varies, and variation of $Q'_{SCI2}$ may result in changes in a size of a TB carried on the PSSCH, as described below. To ensure that a transmission block size (transmission block size, TBS) remains constant across multiple PSSCH transmissions, an actual quantity of PSFCH symbols is not used in calculations of $N_{symbol}^{PSSCH}$. In addition, $M_{sc}^{SCI2}(l)$ is calculated without considering a quantity of resource elements (resource element, RE) occupied by a PSSCH demodulation reference signal (demodulation reference symbol, DMRS) and a quantity of REs occupied by a phase-tracking reference signal (phase-tracking reference signals, PT-RS), which may change during retransmissions.

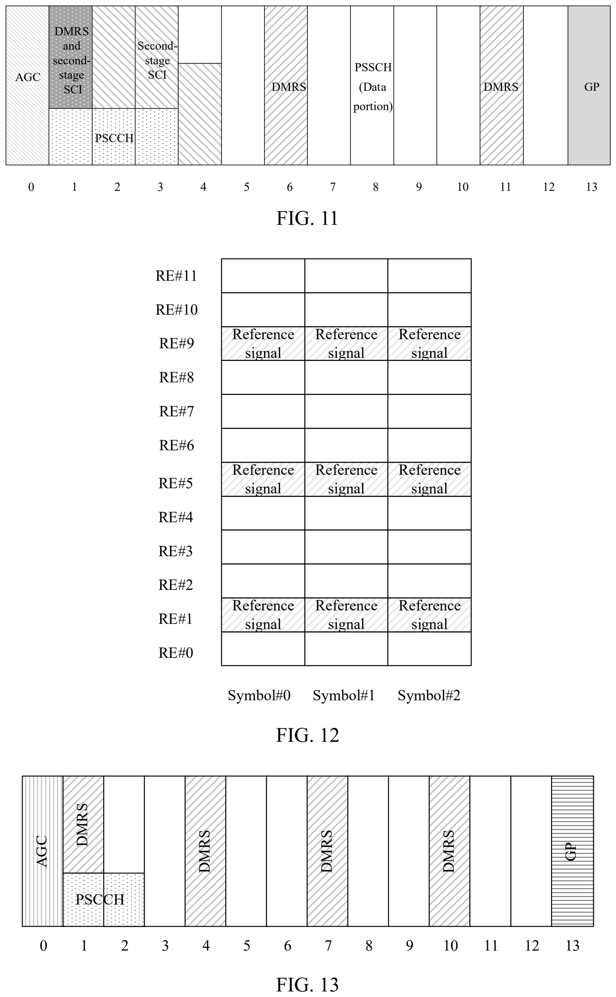

A bit rate of the second-stage SCI may be dynamically adjusted within a specific range, and a specific bit rate to be used may be indicated by first-stage SCI. Therefore, even if the bit rate changes, the receive end is unnecessary to perform blind detection on the second-stage SCI. FIG. 11 is an example diagram of a time-frequency resource occupied by second-stage SCI in a slot. As shown in FIG. 11, modulation symbols for the second-stage SCI may be mapped, using a method of frequency domain first and then time domain, starting from the first symbol where the PSSCH DMRS is located. In OFDM symbols where the DMRS is located, the second-stage SCI may be mapped to REs that are not occupied by the DMRS.

In one resource pool, a plurality of different modulation and coding scheme (modulation and coding scheme, MCS) tables may be used for the data portion of the PSSCH. For example, one or more of the following tables may be used: a regular 64QAM MCS table, a 256QAM MCS table, or a low spectral efficiency 64QAM MCS table. In a single transmission, a specific MCS table used for the data portion of the PSSCH may be indicated by an "MCS table indication" field in the first-stage SCI. To control a PAPR, the PSSCH is required to be transmitted using consecutive PRBs. Since a sub-channel is a minimum frequency domain resource granularity for the PSSCH, the PSSCH is required to occupy consecutive sub-channels.

### Sidelink TBS

The PSSCH follows a TBS determination mechanism for a physical downlink shared channel (physical downlink shared channel, PDSCH) and a physical uplink shared channel (physical uplink shared channel, PUSCH), that is, a TBS may be determined based on a reference value for a quantity of REs used for the PSSCH in a slot where the PSSCH is located, so that a difference between an actual bit rate and a target bit rate is minimized. It should be noted that the reference value for the quantity of REs rather than the actual quantity of REs is used to ensure that the quantity of REs for determining the TBS during PSSCH retransmissions remains unchanged, thereby ensuring that the determined TBS size remains unchanged. To achieve this purpose, the reference value $N_{RE}$ for the quantity of REs occupied by the PSSCH during the TBS determination process can be determined according to the following formula:

$$N_{RE} = N'_{RE} \cdot n_{PRB} - N_{RE}^{SCI,1} - N_{RE}^{SCI,2}$$

In which, $n_{PRB}$ denotes a quantity of PRBs occupied by the PSSCH, $N_{RE}^{SCI,1}$ denotes a quantity of REs (including REs occupied by the DMRS of the PSCCH) occupied by the first-stage SCI, $N_{RE}^{SCI,2}$ denotes a quantity of REs occupied by the second-stage SCI (as described above), and $N'_{RE}$ denotes a quantity of reference REs available for the PSSCH in one PRB. may be determined according to the following formula:

$$N'_{RE} = N_{sc}^{RB} \left( N_{symb}^{sh} - N_{symb}^{PSFCH} \right) - N_{oh}^{PRB} - N_{RE}^{DMRS}$$

In which, $N_{sc}^{RB}$ may represent a quantity of subcarriers in one PRB. For example, $N_{sc}^{RB} = 12$. $N_{symb}^{sh}$ represents a quantity of symbols available for a sidelink in one slot, and may exclude the last GP symbol and the first symbol used for AGC. $N_{symb}^{PSFCH} =$ represents a reference value for a quantity of symbols occupied by the PSFCH. For example, $N_{symb}^{PSFCH} = 0$ or 3, and a specific value may be indicated by a "PSFCH symbol quantity" field in the first-stage SCI. $N_{oh}^{PRB}$ may represent a reference value for a quantity of REs occupied by a PT-RS and a channel state information-reference signal (channel state information-reference signal, CSI-RS), and may be configured by a radio resource control (radio resource control, RRC) layer parameter. $N_{RE}^{DMRS}$ may represent an average quantity of DMRS REs in one slot, and is related to an allowed DMRS pattern in the resource pool. Table 1 shows a correspondence between an allowed DMRS pattern in the resource pool and $N_{RE}^{DMRS}$.

Table 1

| DMRS pattern | $N_{RE}^{DMRS}$ |
|---|---|
| {2} | 12 |

(continued)

| DMRS pattern | $N_{RE}^{DMRS}$ |
|---|---|
| {3} | 18 |
| {4} | 24 |
| {2,3} | 15 |
| {2,4} | 18 |
| {3,4} | 21 |
| {2,3,4} | 18 |

## Sidelink DMRS

In some sidelink communication systems (such as an NR-V2X system), the DMRS pattern for the PSCCH may be the same as a DMRS pattern for a physical downlink control channel (physical downlink control channel, PDCCH). In other words, the DMRS may be located on each OFDM symbol of the PSCCH, and in frequency domain, the DMRS may be located at the {#1, #5, #9} REs of a PRB. FIG. 12 is a schematic diagram of a DMRS pattern for a PSCCH. A DMRS sequence for the PSCCH is generated according to the following formula:

$$r_l(m) = \frac{1}{\sqrt{2}}\left(1 - 2c(m)\right) + j\frac{1}{\sqrt{2}}\left(1 - 2c(m+1)\right)$$

In which, a pseudorandom sequence $c(m)$ may be initialized by $c_{\text{init}} = \left(2^{17}\left(N_{\text{symb}}^{\text{slot}}n_{\text{s,f}}^{\mu} + l + 1\right)\left(2N_{\text{ID}} + 1\right) + 2N_{\text{ID}}\right)\bmod 2^{31}$; where $l$ may represent an index of an OFDM symbol carrying the DMRS in a slot, $n_{\text{s,f}}^{\mu}$ may represent an index of a slot carrying the DMRS in a system frame, $N_{\text{symb}}^{\text{slot}}$ may represent a quantity of OFDM symbols in a slot, and $N_{\text{ID}} \in \{0,1,\cdots,65535\}$. A specific value of $N_{\text{ID}}$ in a resource pool is configured or pre-configured by a network.

Some sidelink communication systems (such as an NR-V2X system) use a plurality of time domain PSSCH DMRS patterns, that is, the design regarding a Uu interface in an NR system is referred to. In one resource pool, a quantity of available DMRS patterns may be related to a quantity of PSSCH symbols in the resource pool. For specific quantities of PSSCH symbols (including the first AGC symbol) and PSCCH symbols, available DMRS patterns and a location of each DMRS symbol in the pattern are shown in Table 2. FIG. 13 is a schematic diagram of time domain locations of four DMRS symbols of a PSSCH when the PSSCH includes 14 symbols.

Table 2

| Quantity of PSSCH symbols (including the first AGC symbol) | Location of a DMRS symbol (relative to a location of the first AGC symbol) | | | | | |
|---|---|---|---|---|---|---|
| | Quantity of PSCCH symbols being 2 | | | Quantity of PSCCH symbols being 3 | | |
| | Quantity of DMRS symbols | | | Quantity of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 13 | 3, 10 | 1, 6, 11 | 1, 4, 7, 10 | 4, 10 | 1, 6, 11 | 1, 4, 7, 10 |

If a plurality of time domain DMRS patterns are configured in a resource pool, a to-be-used time domain DMRS pattern is selected by a transmitting terminal device, and is indicated in the first-stage SCI, so that terminal devices moving fast select high-density DMRS patterns, thereby ensuring the accuracy of channel estimation. Terminal devices moving slowly may use low-density DMRS patterns to improve spectral efficiency.

A method for generating a PSSCH DMRS sequence is almost the same as a method for generating a PSCCH DMRS sequence, and an only difference between the two methods lies in that in an initialization formula $c_{init}$ of the pseudorandom sequence $c(m)$,

$$N_{ID} = \sum_{i=0}^{L-1} p_i \cdot 2^{L-1-i}$$

, where $p_i$ is the $i^{th}$ bit of the CRC of the PSCCH that schedules the PSSCH. L may represent a quantity of bits of the PSCCH CRC, for example, $L$=24.

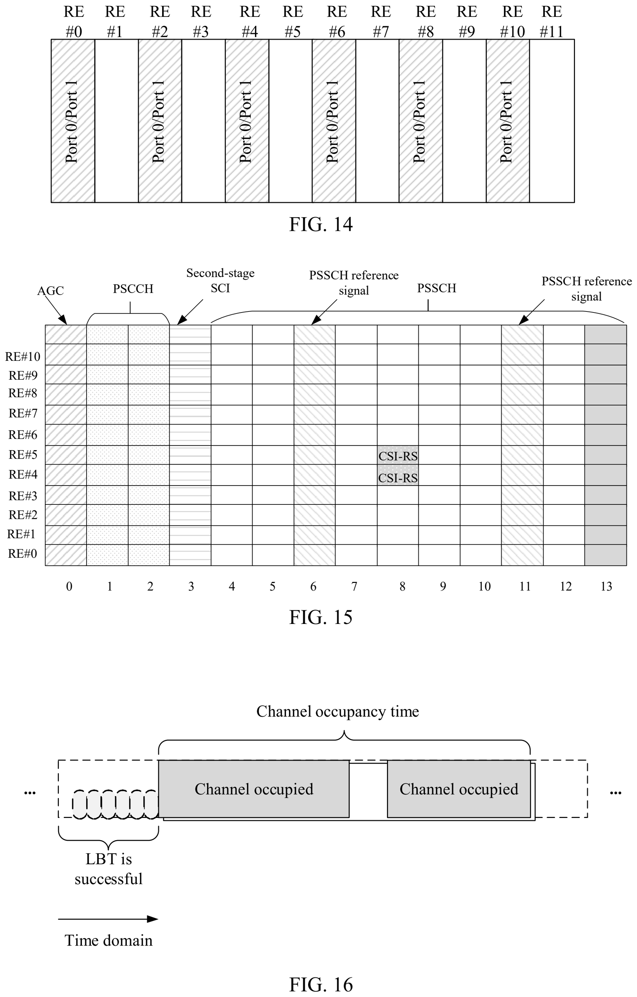

In an NR communication system, a PDSCH and a PUSCH support two frequency domain DMRS patterns: a DMRS frequency domain type 1 and a DMRS frequency domain type 2. For each frequency domain type, there are a single-DMRS symbol type and a double-DMRS symbol type. A single-symbol DMRS frequency domain type 1 supports four DMRS ports, and a single-symbol DMRS frequency domain type 2 supports six DMRS ports. In a case of the double-DMRS symbol type, a quantity of supported ports is doubled. In a sidelink communication system (for example, NR-V2X), since a PSSCH may support at most two DMRS ports, only a single-symbol DMRS frequency domain type 1 may be supported. FIG. 14 is an example diagram of a single-symbol DMRS frequency domain type 1.

**Sidelink CSI-RS**

A sidelink communication system may support a sidelink CSI-RS (SL CSI-RS) to better support unicast communication. An SL CSI-RS may be transmitted when the following three conditions are met: a terminal device transmits a corresponding PSSCH, that is, the terminal device cannot transmit only the SL CSI-RS; higher-layer signalling activates SL CSI-RS reporting; and in a case in which higher-layer signalling activates SL CSI-RS reporting, a corresponding bit in the second-stage SCI transmitted by the terminal device triggers SL CSI-RS reporting.

A maximum quantity of ports supported for an SL CSI-RS is 2. The SL CSI-RS from two different ports is multiplexed on two adjacent REs in a same OFDM symbol using code division. In one PRB, there is one SL CSI-RS on each port, that is, a density is 1. Therefore, the SL CSI-RS is carried on at most one OFDM symbol in one PRB. A specific location of the OFDM symbol may be determined by a transmitting terminal device. To avoid an impact on resource mapping for a PSCCH and second-stage SCI, the SL CSI-RS cannot be located in a same OFDM symbol as the PSCCH and the second-stage SCI. An OFDM symbol in which a PSSCH DMRS is located has relatively high channel estimation accuracy, and SL CSI-RSs from two ports occupy two consecutive REs in frequency domain. Therefore, the SL CSI-RSs cannot be transmitted on a same OFDM symbol as the PSSCH DMRS. A location of an OFDM symbol in which an SL CSI-RS is located is indicated by an sl-CSI-RS-FirstSymbol parameter in PC5 RRC.

A location of the first RE occupied by an SL CSI-RS in one PRB may be indicated by an sl-CSI-RS-FreqAllocation parameter in PC5 RRC. If there is one port for the SL CSI-RS, the parameter may be a bitmap with a length of 12, corresponding to 12 REs in one PRB. If there are two ports for the SL CSI-RS, the parameter may be a bitmap with a length of 6. In this case, the SL CSI-RS may occupy two REs: $2f(1)$ and $2f(1)$+1, where $f(1)$ may represent an index of a bit with a value 1 in the above bitmap. A frequency domain location of the SL CSI-RS may also be determined by the transmitting terminal device. The determined frequency domain location of the SL CSI-RS cannot conflict with the PT-RS. FIG. 15 is an example diagram of a time-frequency location of an SL CSI-RS. In FIG. 15, a quantity of ports for the SL CSI-RS is 2, sl-CSI-RS-FirstSymbol is 8, and sl-CSI-RS-FreqAllocation is $[b_5, b_4, b_3, b_2, b_1, b_0]$ = [0,0, 0,1, 0, 0].

**Unlicensed spectrum communication**

Unlicensed spectrum is a spectrum that is classified by a country and a region and that can be used for communication of a radio device. The spectrum is generally considered as a shared spectrum. That is, a communications device can use the spectrum provided that a regulatory requirement set for the spectrum by a country or a region is met, without applying for a dedicated spectrum grant from a dedicated spectrum management authority of the country or the region. The unlicensed spectrum may also be referred to as a shared spectrum, a grant-free spectrum, an unlicensed band, a grant-free band, or the like.

In an LTE system, unlicensed spectrum is used as a supplementary band to licensed spectrum for cellular networks. For an NR system, the NR system may achieve seamless coverage, high spectral efficiency, high peak rates, and high reliability for cellular networks. The NR system may also use unlicensed spectrum as part of 5G cellular network technologies to provide services to users. In the 3GPP R16 standard, an NR system operating on unlicensed spectrum is discussed, referred to as an NR unlicensed (new radio unlicensed, NR-U) system.

The NR-U system may support two networking modes: licensed-assisted access and independent unlicensed access. According to licensed-assisted access, a network is accessed by using licensed spectrum, with unlicensed spectrum serving as a secondary carrier for use. Independent unlicensed access may allow for standalone networking using unlicensed spectrum, with a terminal device directly accessing a network through the unlicensed spectrum. The unlicensed spectrum used by the NR-U system introduced in 3GPP R16 is primarily in the 5GHz and 6GHz frequency bands. For example, in the United States, the unlicensed spectrum ranges from 5925 to 7125 MHz, while in Europe, the unlicensed spectrum ranges from 5925 to 6425 MHz. In the R16 standard, a band 46 (5150 MHz -5925 MHz) is newly defined for use as unlicensed spectrum.

The use of unlicensed spectrum must comply with specific regulatory requirements of each country and region. For example, a communications device can access a channel on unlicensed spectrum through channel listening so as to use the unlicensed spectrum, thereby avoiding conflicts with other communications devices or other communications systems (for example, a Wi-Fi system). In an implementation, a communications device may follow the LBT principle to use unlicensed spectrum. Therefore, for NR-U, the NR technology needs to be enhanced accordingly to meet the regulatory requirements for unlicensed bands, while efficiently utilizing the unlicensed spectrum to provide services. In the 3GPP R16 standard, the following aspects of the NR-U technology have been standardized: a channel listening process, an initial access process, control channel design, HARQ and scheduling, and unscheduled grant-free transmission, and the like.

## LBT

The LBT principle may include the following: before transmitting a signal using a channel on unlicensed spectrum, a communications device needs to first perform LBT. In a case in which LBT is successfully performed, a channel listening result indicates that the channel is idle. The communications device can transmit a signal on the channel only when the channel is idle. If the channel listening result of the channel obtained by the communications device indicates that the channel is busy or LBT fails, the communications device cannot transmit a signal on the channel. In addition, to ensure fair usage of spectrum resources on the shared spectrum, if LBT is successfully performed by the communications device on the channel on the unlicensed spectrum, a duration that the communications device performs communication and transmission by using the channel cannot exceed a specific threshold. The mechanism ensures that different communications devices each have an opportunity to access the shared channel by limiting a maximum communication duration after LBT is successfully performed, so that different communications systems can operate by using the shared spectrum without a conflict.

Signal transmission on the unlicensed spectrum involves concepts related to channel occupation, for example, a channel occupancy time (channel occupancy time, COT), a maximum channel occupancy time (maximum channel occupancy time, MCOT), a COT of a network device (for example, a base station), and a COT of a terminal device.

MCOT may refer to a maximum duration during which a communications device is allowed to transmit signals using a channel on unlicensed spectrum after LBT is successfully performed. It should be understood that the MCOT is a duration occupied for signal transmission. Since communications devices have different channel access priorities, the communications devices may have different MCOTs. A maximum value of the MCOT may be, for example, set to 10 ms.

FIG. 16 is an example diagram of a channel occupancy time obtained by a communications device after successfully performing LBT on a channel on unlicensed spectrum and signal transmission performed using resources within the channel occupancy time.

Although channel listening is not a global regulatory requirement, the channel listening can provide benefits such as avoiding communication and transmission conflicts between communications systems operating on the shared spectrum. Therefore, in the design of an NR system operating on the unlicensed spectrum, channel listening is a feature that communications devices within the system needs to support.

## Channel access modes for unlicensed spectrum

In some communications systems (such as an NR-U system), a channel access mode based on LBT is introduced.

From the perspective of network deployment for a system, a channel access mode based on LBT may include two mechanisms: one is LBT for a load based equipment (load based equipment, LBE), also referred to as dynamic channel listening or dynamic channel occupancy; and the other is LBT for a frame based equipment (frame based equipment, FBE), also referred to as semi-static channel listening or semi-static channel occupancy. The LBT principle for dynamic channel listening is as follows: a communications device performs LBT on a carrier on unlicensed spectrum when a service instruction is received, and begins to transmit a signal on the carrier after the LBT is successful.

The LBT method for dynamic channel listening may include a type 1 (Type1) channel access mode and a type 2 (Type2) channel access mode.

Channel listening or channel access related content is explained in detail below with a network device used as an example. It may be understood that processes for terminal devices and other communications devices to perform channel listening or channel access are similar to a process for the network device.

The type 1 channel access mode may also be referred to as random backoff multi-slot channel detection based on contention window size adjustment. In the type 1 channel access mode, a corresponding channel access priority class (channel access priority class, CAPC) p may be selected based on a priority of a service to be transmitted. The communications device may initiate a channel occupancy with a length of Tmcot based on the channel access priority class p.

If the network device uses the type 1 channel access mode, the network device not only transmits its own data during the channel occupancy time, but also shares the COT with a terminal device. Sharing the COT with a terminal device indcates allowing the terminal device to transmit data within the duration of the COT (that is, the COT obtained by the network device through channel access). Accordingly, if the terminal device uses the type 1 channel access mode, the terminal device not only transmits its own data during the channel occupancy time, but also shares the COT with the network device.

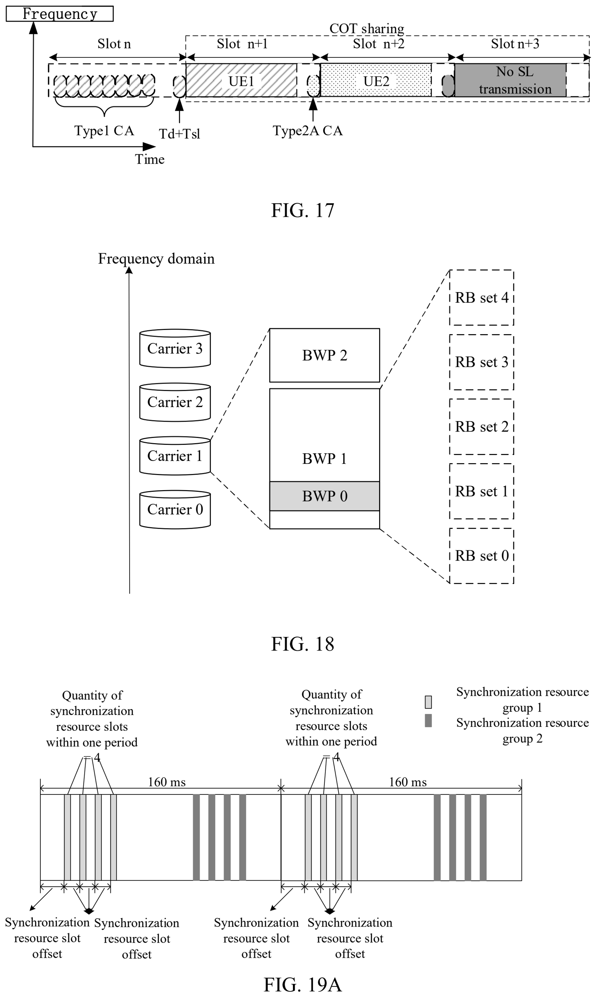

When resources within the COT are shared with the terminal device for uplink transmission, the terminal device may use a type 2A channel access mode, and a type 2B channel access mode, or a type 2A channel access mode for channel access (channel access, CA). The type 2A channel access mode, the type 2B channel access mode, or the type 2A channel access mode is a channel access mode based on a listening slot of a fixed length. FIG. 17 is an example diagram of COT sharing. As shown in FIG. 17, a terminal device 1 (UE1) may perform LBT within Td+Ts1, so as to use the shared COT by using the channel access mode. A terminal device 2 (UE2) may use the shared COT by using the type 2A channel access mode before a slot n+2.

Table 3 shows channel access priorities and corresponding parameters when a terminal device performs the type 1 channel access mode.

Table 3

| Channel access priority class ($p$) | $m_p$ | $CW_{min,p}$ | $CW_{max,p}$ | $T_{mcot,p}$ | Allowed $CW_p$ value |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

A default channel access mode on the network device side is the type 1 channel access mode. Channel access parameters corresponding to the channel access priority class $p$ are shown in Table 3. In Table 3, $m_p$ may denote a quantity of backoff slots corresponding to the channel access priority class $p$, $CW_p$ may denote a size of a contention window (contention window, CW) corresponding to the channel access priority class $p$, $CW_{min,p}$ may denote a minimum value for $CW_p$ corresponding to the channel access priority class $p$, $CW_{max,p}$ may denote a maximum value for $CW_p$ corresponding to the channel access priority class $p$, and $T_{mcot,p}$ may denote a maximum channel occupation duration corresponding to the channel access priority class $p$.

The type 2 (Type2) channel access mode may also be referred to as a channel access mode based on a channel listening slot of a fixed length. The type 2 channel access mode includes a type 2A (Type2A) channel access mode, a type 2B (Type2B) channel access mode, and a type 2C (Type2C) channel access mode. In a case in which resources within the COT are shared with another communications device, the another communications device may use the type 2 channel access mode.

In the type 2A channel access mode, the communications device may perform a channel detection within a single slot that lasts for 25 μs. This is, the communications device may begin the channel detection at a time insant which is 25 μs earlier than a time instant for starting to transmit data. The 25 μs channel detection may include one 16 μs channel detection and one 9 μs channel detection. If both detection results indicate that the channel is idle, the channel can be considered idle, and channel access is allowed.

In the type 2B channel access mode, the communications device may perform a channel detection within a single slot that lasts for 16 μs. During the channel detection, if the communications device detects that the channel is idle for more than 4 μs during the last 9 μs, the channel can be considered idle.

In the type 2C channel access mode, the communications device may perform no channel detection and directly transmit data on a channel. In the type 2C channel access mode, a time difference between a current transmission and a previous transmission is less than or equal to 16 μs. That is, if the time difference between the two transmissions is less than or equal to 16 μs, the two transmissions may be considered as the same transmission, and no channel detection is required. It should be noted that in the type 2C channel access mode, a transmission duration for the communications device is limited, and typically cannot exceed 584 μs.

A special case to be noted is when the network device initiates channel occupancy to transmit a synchronization signal block (synchronizing signal/PBCH block, SSB) within a discovery reference signal (discovery reference signal, DRS) window, the DRS window does not include unicast data transmission of the terminal device, and a length of the DRS window does not exceed 1 ms and a duty cycle of the transmission within the DRS window does not exceed 1/20, the network device may initiate channel occupancy by using the type 2A channel access mode.

## Channel access parameter indication

In some communications systems (such as an NR-U system) based on unlicensed spectrum, when a terminal device is scheduled to perform PUSCH or physical uplink control channel (physical uplink control channel, PUCCH) transmission, a network device may indicate, using downlink control information (downlink control information, DCI) carrying an uplink grant (UL grant) or a downlink grant (DL grant), a channel access mode corresponding to the PUSCH or PUCCH. In addition, since some channel access modes require an inerval of 16 $\mu$s or 25 $\mu$s, the terminal device can ensure the required interval between two transmissions by transmitting a cyclic prefix extension (cyclic prefix extension, CPE). Accordingly, the network device may indicate a CPE length of the first symbol in uplink transmission of the terminal device.

During specific indication, the network device may explicitly indicate a CPE length, a channel access mode, a channel access priority, and other channel access parameters to the terminal device through joint encoding. The following describes characteristics of indication methods for channel access parameters introduced in different DCI formats.

1. Backoff uplink grant (DCI format 0_0) for scheduling PUSCH transmission

Sets of joint indication of channel access modes and CPE lengths are predefined in the standard, as shown in Table 4. The backoff uplink grant includes 2-bit LBT indication information. The 2-bit LBT indication information is used to indicate a channel access mode and a CPE length jointly encoded from the sets shown in Table 4. The channel access mode and the CPE length are used for PUSCH transmission. If the channel access mode is type 1 channel access, the terminal device may select the CAPC based on a service priority.

Table 4

| LBT indication | Channel access mode | CPE length |
| --- | --- | --- |
| 0 | Type 2C channel access | C2*symbol length-16$\mu$s-TA |
| 1 | Type 2A channel access | C3*symbol length-25$\mu$s-TA |
| 2 | Type 2A channel access | C1*symbol length-25$\mu$s |
| 3 | Type 1 channel access | 0 |

In Table 4, a value of C1 is specified in a protocol. When a subcarrier spacing is 15 kHz or 30 kHz, C1 = 1. When a subcarrier spacing is 60 kHz, C1 = 2. Values of C2 and C3 are configured by higher-layer parameters. When a subcarrier spacing is 15 kHz or 30 kHz, a value for C2 and C3 ranges from 1 to 28; and when a subcarrier spacing is 60 kHz, a value for C2 and C3 ranges from 2 to 28.

2. Backoff downlink grant (DCI format 1_0) for scheduling PDSCH transmission

Sets of joint indication of channel access modes and CPE lengths are predefined in the standard, as shown in Table 4. The backoff downlink grant includes 2-bit LBT indication information. The 2-bit LBT indication information is used to indicate a channel access mode and a CPE length jointly encoded from the sets shown in Table 4. The channel access mode and the CPE length are used for PUCCH transmission, where the PUCCH may carry acknowledgment (acknowledgement, ACK) information or negative acknowledgement (negative acknowledgement, NACK) information corresponding to a PDSCH. If the channel access mode is type 1 channel access, it may be determined by the terminal device that a CAPC used for PUCCH transmission is 1.

3. Non-backoff uplink grant (DCI format 0_1) for scheduling PUSCH transmission

LBT parameter indication sets are configured by higher layers. The LBT parameter indication sets include at least one jointly encoded item. The jointly encoded item is used to indicate a channel access mode, a CPE length, and a CAPC. The non-backoff uplink grant includes LBT indication information. The LBT indication information is used to indicate a channel access mode, a CPE length, and a CAPC jointly encoded from the LBT parameter indication sets. The channel access mode, the CPE length, and the CAPC are used for PUSCH transmission. If the indicated channel access mode is type 2 channel access, the indicated CAPC is a CAPC used by the network device when obtaining the COT. In addition, the LBT indication information includes at most six bits.

4. Non-backoff downlink grant (DCI format 1_1) for scheduling PDSCH transmission

LBT parameter indication sets are configured by higher layers. The LBT parameter indication sets include at least one jointly encoded item. The jointly encoded item is used to indicate a channel access mode and a CPE length. The non-backoff downlink grant includes LBT indication information. The LBT indication information is used to indicate a channel access mode and a CPE length jointly encoded from the LBT parameter indication sets. The channel access mode and the CPE length are used for PUCCH transmission. The PUCCH may carry ACK information or NACK information corresponding to the PDSCH. If the channel access mode is type 1 channel access, it may be determined by the terminal device that a CAPC used for PUCCH transmission is 1. In addition, the LBT indication information includes at most four bits.

In addition to the explicit indication mentioned above, the network device may implicitly indicate a channel access mode within the COT. For example, when a terminal device receives, from a base station, an uplink grant or a downlink grant indicating that a channel access type corresponding to the PUSCH or PUCCH is type 1 channel access, and if the terminal device can determine that the PUSCH or PUCCH is within a COT of the network device, for example, the terminal device receives a DCI format 2_0 from the network device, and determines, based on the DCI format 2_0, that the PUSCH or PUCCH is within the COT of the network device, the terminal device may update a channel access type corresponding to the PUSCH or PUCCH with type 2A channel access and no longer use the type 1 channel access.

## SL frequency domain resource allocation

Frequency domain resource allocation for SL communication is similar to frequency domain resource allocation for Uu interface communication. FIG. 18 is an example diagram of frequency domain resource allocation for a sidelink.

As shown in FIG. 18, when there are a plurality of carriers for frequency domain resources, the terminal device and the system may support a multi-carrier communication (for example, carrier aggregation) function. Certainly, the system may alternatively support only a single-carrier scenario. In this case, the system and the terminal device are unnecessary to support a multi-carrier communication function. A frequency resource of a single carrier may be divided into one or more BWPs. In related technologies, when there are a plurality of BWPs in frequency domain, only one BWP can be activated at a specific time. In an SL system, only one SL BWP is supported by related technologies. In some grant-free spectrum communications systems (for example, an NR-U system), a single BWP is divided into a plurality of RB sets (RB set). Each RB set may have a size of 20 MHz. An RB set may serve as a minimum unit for LBT.

## S-SSB time domain resource allocation

In some sidelink communication systems, time domain resources are allocated for S-SSBs by taking slots as the smallest granularity. An S-SSB synchronization period (referred to as a period or an S-SSB period hereafter) may be 160 ms. Depending on different subcarrier spacings, a quantity of S-SSB slots within each period varies. For example, if a subcarrier spacing is 15 kHz, a quantity of S-SSB slots within a period is 1; if a subcarrier spacing is 30 kHz, configurable parameters for S-SSB slots within a period are {1, 2}; if a subcarrier spacing is 60 kHz, configurable parameters for S-SSB slots within a period are {1, 2, 4}; and so on. FIG. 19A is an example diagram of S-SSB time domain resource configuration. As shown in FIG. 19A, within a period (160 ms), there are two sets of S-SSBs, namely a synchronization resource group 1 and a synchronization resource group 2. One set of S-SSBs may be used for transmission, while the other set of S-SSBs may be used for reception. In FIG. 19A, each set of S-SSBs contains four S-SSB slots. For ease of description and understanding, the embodiments provided in this application are explained with one set of S-SSBs as an example. It may be understood that the method provided in the embodiments of this application may also be applied to the other set of S-SSBs.

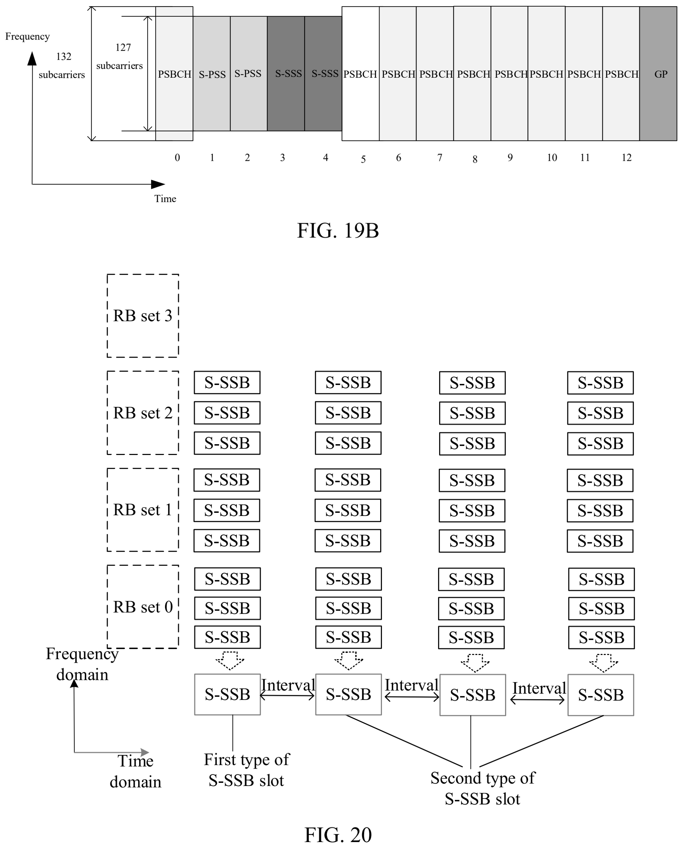

FIG. 19B is an example diagram of a time-frequency structure of an S-SSB. As shown in FIG. 19B, an S-SSB slot contains 14 OFDM symbols. The symbols are used to carry a PSBCH, S-PSS, and S-SSS. In frequency domain, the PSBCH may occupy 132 subcarriers, while the S-PSS/S-SSS sequences may occupy 127 subcarriers.

## S-SSB time-frequency domain mapping

As described above, a frequency domain resource corresponding to an S-SSB slot may include a plurality of RB sets. The terminal device may attempt to map or transmit an S-SSB in one or more RB sets in an S-SSB slot. If the terminal device attempts to map or transmit an S-SSB in an RB set, the terminal device may perform LBT in the RB set. If LBT is successful in the RB set, that is, it is detected that the RB set is not occupied (or is available), an S-SSB may be mapped or transmitted in the RB set. If the terminal device attempts to map or transmit S-SSBs in a plurality of RB sets, the terminal device may perform LBT in each of the plurality of RB sets, and determine, based on an LBT result for each RB set, whether to map or transmit an S-SSB in a corresponding RB set.

Within an RB set, the S-SSB is repetitively mapped in frequency domain. In a plurality of RB sets corresponding to one slot, the S-SSB is also repetitively mapped within each RB set.

Mapping of S-SSBs is described below using FIG. 20 as an example. As shown in FIG. 20, a frequency domain resource corresponding to an S-SSB slot includes four RB sets. If the four RB sets are all configured to transmit S-SSBs, the terminal device may perform LBT in each of the four RB sets. As shown in FIG. 20, when the terminal device successfully preforms LBT in an RB set 0, an RB set 1, and an RB set 2 in the first S-SSB slot, the terminal device maps or transmits S-SSBs in the three RB sets. As can be seen from FIG. 20, within one RB set, an S-SSB is repetitively mapped three times.

S-SSB slots may include first type of S-SSB slots and second type of S-SSB slots. The second type of S-SSB slots may be supplementary candidate slots for the first type of S-SSB slots. The first type of S-SSB slots may be, for example, S-SSB slot resources configured for R16/R17 sidelink, while the second type of S-SSB slots are additional S-SSB slot resources newly defined in R18.

The first type of S-SSB slots may correspond to or associated with K second type of S-SSB slots. An interval between S-SSB slots may be configured or pre-configured. Referring to FIG. 20 again, one first type of S-SSB slot corresponds to three second type of S-SSB slots. An interval between the four S-SSB slots is shown in FIG. 20.

In some conferences, transmission of S-SSBs has been discussed. The following provides discussions on transmission of S-SSBs in some conferences by examples.

Conference RAN1#109-e

Agreement (Agreement)

For an S-SSB and synchronization in SL-U (For S-SSB and synchronization in SL-U):
For further study (for further study, FFS): time domain locations of S-SSB resources, e.g., whether/how to introduce more candidate occasions compared with R16/R17 NR SL design, etc. (the time domain locations of S-SSB resources, e.g., whether/how to introduce more candidate occasions compared with R16/R17 NR SL design, etc.)

Select at least one of the following solutions to meet OCB and PSD requirements for S-SSB transmission (Down-selection at least one of the following solutions to meet OCB and PSD requirement for S-SSB transmission).

Option 1 (Option 1): Using interlaced RB transmission (Using interlaced RB transmission).

Option 2 (Option 2): an S-SSB is multiplexed with other SL transmissions in the same slot (S-SSB multiplexing with other SL transmissions in the same slot).

Option 3 (Option 3): Repetition of S-PSS/S-SSS/PSBCH in frequency domain (Repetition of S-PSS/S-SSS/PSBCH in frequency domain).

Option 4 (Option 4): S-PSS/S-SSS/PSBCH with a wider bandwidth (S-PSS/S-SSS/PSBCH with wider bandwidth).

FFS: whether to support 4-symbol S-SSBs (whether to support 4 symbols S-SSB).

Note (Note): The 4-symbol S-SSBs may be considered with options 1/2/3/4 above (4 symbols S-SSB can be considered with options 1/2/3/4 above).

FFS: whether the temporary exemption of the OCB requirement is applicable for S-SSB transmission (whether the temporary exemption of OCB requirement is applicable for S-SSB transmission).

FFS: whether any changes to R16/R17 NR SL synchronization procedure (whether any changes to R16/R17 NR SL synchronization procedure).

Conference RAN1#110

Agreement (Agreement)

If RAN 1 decides to perform LBT for S-SSB transmission, in addition to S-SSB occasions in R16/R17 NR SL design, support additional candidate S-SSB occasions (If RAN1 decides that LBT is performed for S-SSB transmission, in addition to the S-SSB occasions in R16/R17 NR SL design, support additional candidate S-SSB occasions).

FFS: a quantity and locations of additional candidate S-SSB occasions (the number and locations of additional candidate S-SSB occasions).

FFS: when a terminal transmits an S-SSB in such additional candidate S-SSB occasions, and the related Rx terminal's behavior (when a UE transmits S-SSB on such additional candidate S-SSB occasions, and the related Rx UE's behavior).

Agreement (Agreement)

For an S-SSB and synchronization in SL-U (For S-SSB and synchronization in SL-U): No changes on R16 NR SL S-PSS/S-SSS sequence generation (No changes on R16 NR SL S-PSS/S-SSS sequence generation); continue to study the 4 options from the previous agreement and whether/how temporary exemption of OCB requirement is applicable for S-SSB transmission, e.g., how to meet a minimum of 2 MHz requirement under 15 kHz SCS (Continue studying the 4 options from the previous agreement and whether/how temporary exemption of OCB requirement is applicable for S-SSB transmission, e.g., how to meet the minimum of 2 MHz requirement under 15 kHz SCS).

Conference RAN1#110bis-e

Agreement (Agreement)

To meet OCB and PSD requirements for S-SSB transmission, select from the following options for 15 kHz and 30 kHz SCS (To meet OCB and PSD requirement for S-SSB transmission, down-select between the following for 15 kHz and 30 kHz SCS).
Option 1 (Option 1): Using interlaced RB transmission for S-PSS/S-SSS/PSBCH (Using interlaced RB transmission for S-PSS/S-SSS/PSBCH).
Option 3 (Option 3): Repetition of S-PSS/S-SSS/PSBCH in frequency domain (Repetition of S-PSS/S-SSS/PSBCH in frequency domain).
FFS: whether/how the above options apply to all or some of channel types of S-PSS/S-SSS/PSBCH (whether/how the above options apply to all or subset of channel type of S-PSS/S-SSS/PSBCH).
Note: RAN1 further study the relationship between above options and temporary OCB exemption, and the discussion on temporary OCB exemption can continue even if option 1 or option 3 is supported (RAN 1 further studies a relationship between above options and temporary OCB exemption, and discussions on temporary OCB exemption can continue even if option 1 or option 3 is supported)
FFS: how to handle 60 kHz SCS (if needed, not limited to option 1 or option 3) how to handle 60 kHz SCS (if needed, not limited to option 1 or option 3).

Agreement (Agreement)

Regarding usage of PRBs within intra-cell guard band of two adjacent RB sets (Regarding usage of PRBs within intra-cell guard band of two adjacent RB sets):
Such PRBs may be used for PSSCH transmission if and only if a terminal can transmit on the respective LBT channels after performing a channel access procedure in multi-channel case and the terminal uses both of these two RB sets for PSSCH transmission (Such PRBs can be used for PSSCH transmission if and only if a UE can transmit on the respective LBT channels after performing channel access procedure in multi-channel case and the UE uses both of these two RB sets for PSSCH transmission).
FFS details, e.g., handling of potential unequal sub-channel size, for interlaced RB based transmission, whether the PRB(s) in the intra-cell guard band have the same interlace index(s) as the PRBs for PSSCH transmission in these two RB sets (FFS details, e.g., handling of potential unequal sub-channel size, for interlaced RB based transmission, whether the PRB(s) in the intra-cell guard band have the same interlace index(s) as the PRBs for PSSCH transmission in these two RB sets).
Such PRBs are not used for PSCCH transmission (Such PRBs are not used for PSCCH transmission).
FFS: whether or not such PRBs are used for PSFCH/S-SSB transmission (whether or not such PRBs are used for PSFCH/S-SSB transmission).

Agreement (Agreement)

At least R16/R17 NR SL S-SSB slots are excluded from an SL resource pool (At least R16/R17 NR SL S-SSB slots are excluded from SL resource pool).
Note: whether or not additional candidate S-SSB occasions are excluded from a resource pool will be discussed after the details of additional candidate S-SSB occasions are clearer (whether or not additional candidate S-SSB occasions are excluded from resource pool will be discussed after the details of additional candidate S-SSB occasions are clearer).

Agreement (Agreement)

Regarding additional candidate S-SSB occasions (Regarding additional candidate S-SSB occasions): Their number and time domain locations are (pre-)configured or pre-defined.

Conference RAN1#111

Agreement (Agreement)

For S-SSB transmission, select one or more of the following options for 15 kHz and 30 kHz SCS (For S-SSB transmission, down-select one or more of the following for 15 kHz and 30 kHz SCS).

Option 1-1: Using interlaced RB transmission for all of S-PSS/S-SSS/PSBCH (Option 1-1: Using interlaced RB transmission for all of S-PSS/S-SSS/PSBCH).

Option 1-2: Using interlaced RB transmission for PSBCH only, and apply OCB exemption to S-PSS and S-SSS (Option 1-2: Using interlaced RB transmission for PSBCH only, and apply OCB exemption to S-PSS and S-SSS).

Option 3-1: Repeat S-PSS/S-SSS/PSBCH N times in frequency domain, and there is a gap between the repetition(s) to meet OCB requirement (Option 3-1: Repeat S-PSS/S-SSS/PSBCH N times in frequency domain, and there is a gap between the repetition(s) to meet OCB requirement).

FFS details, e.g., a length of a gap is (pre-)configured or pre-defined, a value of N (e.g., N=2) (FFS details, e.g., the length of gap is (pre-)configured or pre-defined, value of N (e.g., N=2)).

FFS: a gap of 0 (gap of 0).

Option 3-2: Repeat only S-PSS/S-SSS K times in frequency domain, and PSBCH is rate matched. There is a gap between the repetition(s) to meet OCB requirement (Option 3-2: Repeat only S-PSS/S-SSS K times in frequency domain, and PSBCH is rate matched. There is a gap between the repetition(s) to meet OCB requirement).

FFS details, e.g., a length of a gap is (pre-)configured or pre-defined, a value of K (the length of gap is (pre-)configured or pre-defined, value of K).

FFS: a gap of 0 (gap of 0).

FFS: PSBCH resource (PSBCH resource).

Option 3-3: keep the legacy S-PSS/S-SSS/PSBCH while repeating PSBCH N times in frequency domain and rate-matching PSBCH to S-PSS/S-SSS symbols, and there is a gap between the PSBCH repetition(s) to meet OCB requirements (Option 3-3: keep the legacy S-PSS/S-SSS/PSBCH while repeating PSBCH N times in frequency domain and rate-matching PSBCH to S-PSS/S-SSS symbols, and there is a gap between the PSBCH repetition(s) to meet OCB requirements).

FFS details, e.g. a length of a gap is (pre-)configured or pre-defined, a value of N (the length of gap is (pre-)configured or pre-defined, value of N).

Option A: Apply OCB exemption to all of S-PSS/S-SSS/PSBCH (Option A: Apply OCB exemption to all of S-PSS/S-SSS/PSBCH).

For Option 1-1 and 1-2 above (For Option 1-1 and 1-2 above).

FFS: whether/how to handle the case when each interlace has only 10 PRBs in an RB set (whether/how to handle the case when each interlace has only 10 PRBs in an RB set).

FFS: whether a transient period issue exists and whether/how to address it (whether transient period issue exists and whether/how to address it).

Agreement (Agreement)

Regarding a quantity and location(s) of additional candidate S-SSB occasions, RAN1 further study the following (Regarding the number and location(s) of additional candidate S-SSB occasions, RAN1 further study the following):

Option 1: Reuse legacy NR SL design, and increase the available values in sl-NumSSB-WithinPeriod for each SCS (Option 1: Reuse legacy NR SL design, and increase the available values in sl-NumSSB-WithinPeriod for each SCS).

Option 2: Each R16/R17 NR SL S-SSB slot has K corresponding additional candidate S-SSB occasions, and the gap between them is (pre-)configured (Option 2: Each R16/R17 NR SL S-SSB slot has K corresponding additional candidate S-SSB occasion, and the gap between them is (pre-)configured).

FFS details, e.g., a value of K, details on a gap length, etc. (value of K, details on gap length, etc.)

Option 3: A quantity and location(s) of additional candidate S-SSB occasions are separately (pre-)configured (Option 3: The number and location(s) of additional candidate S-SSB occasions are separately (pre-)configured).

Option 4: Introduce M contiguous candidate S-SSB occasions in one S-SSB period (Option 4: Introduce M contiguous candidate S-SSB occasions in one S-SSB period).

Option 5: a quantity of candidate S-SSB occasions is (pre-)configured, and locations are determined based on the (pre-)configured quantity (Option 5: the number of candidate S-SSB occasions is (pre-)configured, and locations are determined based on the (pre-)configured number).

Agreement (Agreement)

Regarding additional candidate S-SSB occasions (Regarding additional candidate S-SSB occasions):
In the same S-SSB period, RAN 1 further studies the following (In the same S-SSB period, RAN1 further study the following):

Alt 1: The terminal device attempts to perform transmission in all or some of additional candidate S-SSB occasion(s) only when it fails to perform transmission in R16/R17 S-SSB occasion(s) (Alt 1: UE attempts to transmit on all or some of additional candidate S-SSB occasion(s) only when it fails to transmit on R16/R17 S-SSB occasion(s)).
Alt 2: The terminal device attempts to perform transmission in all additional candidate S-SSB occasion(s) regardless of whether or not it performs transmission in R16/R17 S-SSB occasion(s) (Alt 2: UE attempts to transmit on all additional candidate S-SSB occasion(s) regardless of whether or not it transmitted on R16/R17 S-SSB occasion(s)).
Alt 3: The terminal device may attempt to perform transmission in all or some of additional candidate S-SSB occasion(s) regardless of whether or not it performs transmission in R16/R17 S-SSB occasion(s) (Alt 3: UE can attempt to transmit on all or some of additional candidate S-SSB occasion(s) regardless of whether or not it transmitted on R16/R17 S-SSB occasion(s)).
Alt 4: Upon an LBT failure in a (candidate) S-SSB occasion, a UE attempts to perform transmission in a subsequent additional candidate S-SSB occasion if within a period S-SSB transmission has not been performed transmission in any prior occasions (Alt 4: upon LBT failure on a (candidate) S-SSB occasion, a UE attempts to transmit on the subsequent additional candidate S-SSB occasion if within a period S-SSB transmission has not been transmitted in any prior occasions).

Agreement (Agreement)

Regarding S-SSB, RAN1 further studies the following (Regarding S-SSB, RAN1 further study the following):
How to transmit an S-SSB when an SL BWP includes a plurality of RB sets (How to transmit S-SSB when an SL BWP contains multiple RB sets).

RAN1#112

Agreement (Agreement)

For S-SSB transmission within one RB set, select one or more of the following options for 15 kHz and 30 kHz SCS (For S-SSB transmission within 1 RB set, down-select to one or more of the following for 15 kHz and 30 kHz SCS).
Option 1-1: Using interlaced RB transmission for all of S-PSS/S-SSS/PSBCH (Option 1-1: Using interlaced RB transmission for all of S-PSS/S-SSS/PSBCH).
FFS: whether/how to handle the case when each interlace has only 10 PRBs in an RB set, e.g. whether one or two interlaces will be used for S-SSBs (whether/how to handle the case when each interlace has only 10 PRBs in an RB set, e.g. whether 1 or 2 interlaces will be used for S-SSB).
Option 3-1: Transmit S-PSS/S-SSS/PSBCH N times by repetition in frequency domain, and there is a gap between the repetition(s) to meet OCB requirement (Option 3-1: Transmit S-PSS/S-SSS/PSBCH N times by repetition in frequency domain, and there is a gap between the repetition(s) to meet OCB requirement).
FFS details, e.g., a length of a gap between repetitions is (pre-)configured or pre-defined, a value of N (e.g., N=2), how to reduce PAPR, etc. (the length of gap between repetitions is (pre-)configured or pre-defined, value of N (e.g., N=2), how to reduce PAPR, etc.)
FFS: a gap of 0 (gap of 0).
Option A: Apply OCB exemption to all of S-PSS/S-SSS/PSBCH (Option A: Apply OCB exemption to all of S-PSS/S-SSS/PSBCH).
Continue to study how to meet the minimum 2 MHz requirements under 15 kHz SCS (Continue studying how to meet the minimum 2 MHz requirements under 15 kHz SCS).

Agreement (Agreement)

Select one option or support both of the following options: (Down-select one or support both of the following:)

Option 1: Additional candidate S-SSB occasions are excluded from a resource pool (Option 1: Additional candidate S-SSB occasions are excluded from resource pool).

Option 2: Additional candidate S-SSB occasions belong to a resource pool (Option 2: Additional candidate S-SSB occasions belong to resource pool).

Note: Companies are encouraged to consider aspects including: S-SSB resource overhead, Tx/Rx UE behavior (e.g., whether any blind detection in Option 2), applicable scenarios, etc. (Note: Companies are encouraged to consider aspects including: S-SSB resource overhead, Tx/Rx UE behavior (e.g., whether any blind detection in Option 2), applicable scenarios, etc.)

Agreement (Agreement)

RAN1 further studies the following (RAN1 further study the followings):
Whether/how to maintain a COT when the COT includes a plurality of RB sets and includes S-SSB slot(s), e.g., whether to transmit S-SSB repetitions in more than one RB set, etc. (Whether/how to maintain a COT when the COT contains multiple RB sets and includes S-SSB slot(s), e.g., whether to transmit S-SSB repetitions in more than one RB set, etc.)

RAN1#112bis-e

Working assumption (Working assumption)

Additional candidate S-SSB occasions are excluded from a resource pool (Additional candidate S-SSB occasions are excluded from resource pool).

Agreement (Agreement)

When the SL-BWP includes a plurality of RB sets, study the following (When the SL-BWP contains multiple RB sets, study the followings):
When a UE attempts to transmit an S-SSB in an S-SSB occasion (e.g., R16/17 S-SSB occasion, R18 additional candidate S-SSB occasion) (When UE attempts to transmit S-SSB in an S-SSB occasion (e.g., R16/17 S-SSB occasion, R18 additional candidate S-SSB occasion)).
Alt 1: A UE may transmit S-SSB repetition in more than one RB set (Alt 1: UE may transmit S-SSB repetition in more than one RB set).
FFS details, e.g., location of such S-SSB repetition(s) (e.g., (pre-)configured and/or pre-defined), whether/how to address potential power reduction and/or potential fluctuation of PSBCH-RSRP (location of such S-SSB repetition(s) (e.g., (pre-)configured and/or pre-defined), whether/how to address potential power reduction and/or potential fluctuation of PSBCH-RSRP).
FFS: a relationship with UE's COT (the relationship with UE's COT).
FFS: a case in which a UE may or may not transmit S-SSB repetition in a plurality of RB sets (the scenario that UE may or may not transmit S-SSB repetition in more than one RB set).
Note: whether a UE can transmit S-SSBs in non-contiguous RB sets is subject to RAN4's reply, details can be found in RAN1's LS to RAN4 in R1-2304218 (Note: whether UE can transmit S-SSBs over non-contiguous RB sets is subject to RAN4's reply, details can be found in RAN1's LS to RAN4 in R1-2304218).

Agreement (Agreement)

For S-SSB transmission in one RB set, for 15 kHz and 30 kHz SCS, Alt6 is supported (For S-SSB transmission within 1 RB set, for 15 kHz and 30 kHz SCS, Alt6 is supported):
Alt 6: Support both Option 3-1(revised) and Option B, and enable one of them by (pre-)configuration (Alt 6: Support both Option 3-1 (revised) and Option B, and enable one of them by (pre-)configuration).
Note: the options are as below (Note: the Options are as below).
Option 1-1: Using interlaced RB transmission for all of S-PSS/S-SSS/PSBCH (Option 1-1: Using interlaced RB transmission for all of S-PSS/S-SSS/PSBCH).
FFS: whether/how to handle the case when each interlace has only 10 PRBs in an RB set, e.g. whether one or two interlaces will be used for S-SSBs (whether/how to handle the case when each interlace has only 10 PRBs in a RB set, e.g. whether 1 or 2 interlaces will be used for S-SSB).
Option 3-1(revised): Transmit legacy S-PSS/S-SSS/PSBCH N times by repetition in frequency domain, and there is a gap between the repetition(s) to meet OCB requirement (Option 3-1(revised): Transmit legacy S-PSS/S-SSS/PSBCH N times by repetition in frequency domain, and there is a gap between the repetition(s) to meet OCB requirement).

FFS: a length of a gap between repetitions is (pre-)configured or pre-defined, a value of N (e.g., N=2), whether/how to reduce PAPR (the length of gap between repetitions is (pre-)configured or pre-defined, value of N (e.g., N=2), whether/how to reduce PAPR).

FFS: a gap of 0 (gap of 0).

Option A: Legacy S-SSB (Option A: Legacy S-SSB).

Continue to study how to meet the minimum 2 MHz requirements under 15 kHz SCS for OCB exemption. (Continue studying how to meet the minimum 2 MHz requirements under 15 kHz SCS for OCB exemption.)

Option B: Legacy S-SSB (Option B: Legacy S-SSB).

RAN1 does not pursue further study on how to meet the minimum 2 MHz requirements under 15 kHz SCS for OCB exemption. (RAN1 does not pursue further study on how to meet the minimum 2 MHz requirements under 15 kHz SCS for OCB exemption.)

Note: Options A and B are applicable in a region with no OCB requirement, or with OCB exemption (Note: Option A and B are applicable in region with no OCB requirement, or with OCB exemption).

Conclusion (Conclusion)

Regarding additional candidate S-SSB occasions, in the same S-SSB period, a UE may attempt to perform transmission in additional candidate S-SSB occasion(s) regardless of whether or not it performed transmission in R16/R17 S-SSB slot(s) (Regarding additional candidate S-SSB occasions, in the same S-SSB period, UE can attempt to transmit on additional candidate S-SSB occasion(s) regardless of whether or not it transmitted on R16/R17 S-SSB occasion(s)).

RAN1#113

Agreement (Agreement)

When the SL-BWP includes a plurality of RB sets, support the following (When the SL-BWP contains multiple RB sets, support the followings):

When a UE attempts to transmit an S-SSB in an S-SSB occasion (e.g., R16/17 S-SSB occasion, R18 additional candidate S-SSB occasion) (When UE attempts to transmit S-SSB in a S-SSB occasion (e.g., R16/17 S-SSB occasion, R18 additional candidate S-SSB occasion)), the UE may transmit S-SSB repetition in a plurality of RB sets (UE may transmit S-SSB repetition in more than one RB set).

Select one of the following alternatives in RAN1#114 (Down-select one of the followings in RAN1#114):

Alt 1: At least the power for S-SSB transmission in an anchor RB set does not change due to a quantity of used RB sets (Alt 1: At least the power for S-SSB transmission on anchor RB set does not change due to the number of used RB sets).

FFS details, e.g., whether this can be satisfied by (pre-)configuration, whether the power for S-SSB transmission in other RB set(s) also does not change due to a quantity of used RB sets, etc. (whether this can be satisfied by (pre-)configuration, whether the power for S-SSB transmission on other RB set(s) also does not change due to the number of used RB sets, etc).

Alt 2: The power for S-SSB transmission in each RB set does not change due to a quantity of used RB sets (Alt 2: The power for S-SSB transmission on each RB set does not change due to the number of used RB sets).

FFS details, e.g., whether this can be satisfied by (pre-)configuration, etc. (whether this can be satisfied by (pre-)configuration, etc.)

FFS: Locations of S-SSB repetitions in each RB set are the same as the locations of S-SSB repetitions in the anchor RB set (Locations of S-SSB repetitions in each RB set are the same as the locations of S-SSB repetitions in the anchor RB set).

FFS: how to (pre)configure resources for the S-SSB repetitions (how to (pre)configure resources for the S-SSB repetitions).

Note: an anchor RB set refers to an RB set where an S-SSB indicated by sl-AbsoluteFrequencySSB-r16 is located (Note: anchor RB set refers to the RB set where S-SSB indicated by sl-AbsoluteFrequencySSB-r16 locates).

Note: whether a terminal device can transmit S-SSBs in non-contiguous RB sets is subject to RAN4's reply, details can be found in RAN1's LS to RAN4 in R1-2304218, R1-2306198 (Note: whether UE can transmit S-SSBs over non-contiguous RB sets is subject to RAN4's reply, details can be found in RAN1's LS to RAN4 in R1-2304218, R1-2306198.

Agreement (Agreement)

Regarding "Option 3-1(revised): Transmit legacy S-PSS/S-SSS/PSBCH N times by repetition in frequency domain, and there is a gap between the repetition(s) to meet OCB requirement" (Regarding "Option 3-1(revised): Transmit legacy S-PSS/S-SSS/PSBCH N times by repetition in frequency domain, and there is a gap between the repetition(s) to meet OCB requirement").

Support (Support):

Alt 3: the value of gap is (pre-)configured, and the value of N is (pre-)configured (Alt 3: the value of gap is (pre-)configured, and the value of N is (pre-)configured).
FFS: a value range for a gap and N (value range for gap and N).
FFS: whether N for different RB sets can be different (whether N for different RB sets can be different).
FFS: whether to apply any restriction on sl-AbsoluteFrequencySSB-r16 for 60 kHz (whether to apply any restriction on sl-AbsoluteFrequencySSB-r16 for 60 kHz).
FFS: whether/how to support reducing PAPR of S-SSB transmission, at least considering the following options (whether/how to support reducing PAPR of S-SSB transmission, at least considering the following options):

Option 1: use different $N_{\mathrm{ID}}^{\mathrm{SL}}$ across the different S-SSB repetitions to determine the initial scrambling seed of PSBCH, and the sequence shift for S-SSS and S-PSS (Option 1: use different $N_{\mathrm{ID}}^{\mathrm{SL}}$ across the different S-SSB repetitions to determine the initial scrambling seed of PSBCH, and the sequence shift for S-SSS and S-PSS).
Option 2: phase adjustment between repetitions (Option 2: phase adjustment among repetitions).
Option 3: no specification impact to reduce PAPR (Option 3: no specification impact to reduce PAPR).
Option 4: use an S-SSB repetition index to scramble different S-SSB repetition(s) (Option 4: use S-SSB repetition index to scramble different S-SSB repetition(s)).

Agreement (Agreement)

Regarding a quantity and location(s) of additional candidate S-SSB occasions, support (Regarding the number and location(s) of additional candidate S-SSB occasions, support):
Option 2 (12): Each R16/R17 NR SL S-SSB slot has K corresponding additional candidate S-SSB occasion(s) in different time slot(s), and the gap between them is (pre-)configured (Option 2 (12): Each R16/R17 NR SL S-SSB slot has K corresponding additional candidate S-SSB occasion(s) in different time slot(s), and the gap between them is (pre-)configured).
FFS details, e.g., value of K, details on a gap length (including possibility of being 0), etc. (FFS details, e.g., value of K, details on gap length (including possibility of being 0), etc.)
As described above, in a case that the terminal device successfully performs LBT in an S-SSB slot, the terminal device may map and transmit an S-SSB in the S-SSB slot. However, in a case in which LBT fails to be performed in an S-SSB slot, behavior to be performed by the terminal device is unclear, which may affect synchronization performance of sidelink, resulting in a failure in synchronization between the terminal device and another terminal device. For example, if the S-SSB slot is a first type of S-SSB slot, and the terminal device does not attempt to transmit an S-SSB in a second type of S-SSB slot corresponding to the first type of S-SSB slot, the terminal device may not to transmit an S-SSB within a current S-SSB period, which may result in a failure in synchronization of the terminal device with another terminal device.
It should be noted that, failing to perform LBT in an S-SSB slot may include: failing to perform LBT in all RB sets in the S-SSB slot, or failing to perform LBT in a specific RB set in the S-SSB slot, or failing to perform LBT in any one or more RB sets in the S-SSB slot.

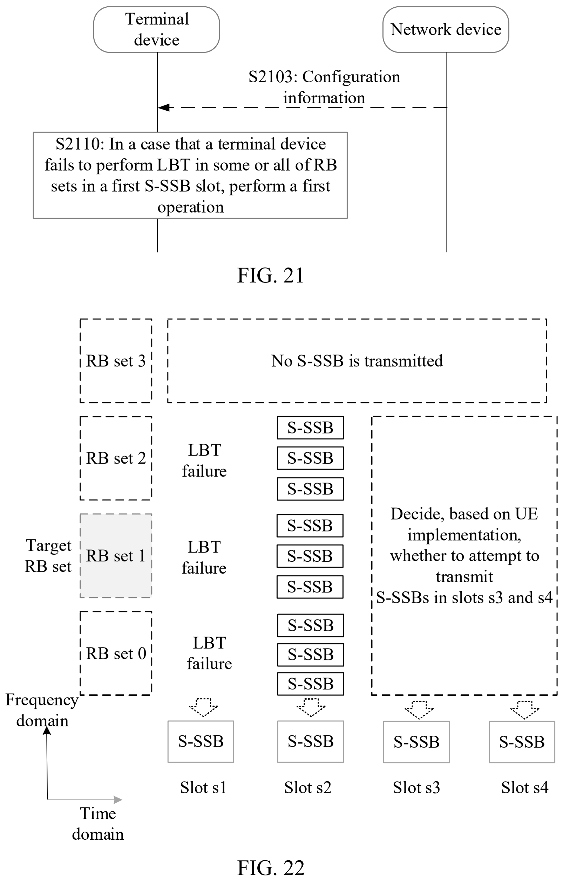

FIG. 21 is a schematic flowchart of a wireless communication method according to an embodiment of this application, to resolve the foregoing problems. The method shown in FIG. 21 may be executed by a terminal device. The method shown in FIG. 21 may include step S2110.
In step S2110, in a case that a terminal device fails to perform LBT in some or all of RB sets in a first S-SSB slot, the terminal device performs a first operation.
The first S-SSB slot may be a resource for transmitting an S-SSB. The first S-SSB slot may be a first type of S-SSB slot or a second type of S-SSB slot. In addition, the S-SSB slot may be an occasion for transmitting an S-SSB. Therefore, in this application, the term "S-SSB slot" may also be replaced with "S-SSB transmission occasion". That is, the first S-SSB slot may also be replaced with a first S-SSB transmission occasion.
The first S-SSB slot may be any one of a plurality of S-SSB slots within an S-SSB period. Alternatively, the first S-SSB slot may be a specific S-SSB slot within an S-SSB period. For example, the first S-SSB slot may be the first S-SSB slot within an S-SSB period. Alternatively, the first S-SSB slot may be the last S-SSB slot within an S-SSB period.

It should be noted that all RB sets in the first S-SSB slot may refer to all RB sets in the first slot that are configured to perform LBT, or all RB sets included within the first S-SSB slot.

In a case in which LBT fails to be performed in some or all of RB sets in the first S-SSB slot, the terminal device is unable to transmit S-SSBs in some or all of RB sets in the first S-SSB slot, which may result in synchronization anomalies. In this application, the behavior (that is, the first operation) to be performed by the terminal device is defined, thereby avoiding synchronization anomalies between the terminal device and another device to some extent.

In some embodiments, in a case that the terminal device fails to perform LBT in all or some of RB sets in the first S-SSB slot, the first operation may include: performing LBT in a second S-SSB slot. The process of performing LBT in the second S-SSB slot may include performing LBT in some or all of RB sets in the second S-SSB slot.

The second S-SSB slot may be a slot associated with the first S-SSB slot. For example, the second S-SSB slot and the first S-SSB slot belong to a same S-SSB period. For another example, the second S-SSB slot may be a second type of S-SSB slot corresponding to the first S-SSB slot. Optionally, the first S-SSB slot may be a first type of S-SSB slot, and the second S-SSB slot may be any second type of S-SSB slot corresponding to the first S-SSB slot or a specific second type of S-SSB slot. Alternatively, the first S-SSB slot may be a second type of S-SSB slot, the second S-SSB slot may also be a second type of S-SSB slot, and the first S-SSB slot and the second S-SSB slot may correspond to a same first type of S-SSB slot. For another example, the second S-SSB slot may have a time relationship with the first S-SSB slot. For example, the second S-SSB slot may be an S-SSB slot closest to the first S-SSB slot.

It should be noted that in a case in which the second S-SSB slot is a second type of S-SSB slot, the second S-SSB slot may be any second type of S-SSB slot within an S-SSB period or a specific second type of S-SSB slot. For example, the second S-SSB slot may be the first or the last second type of S-SSB slot corresponding to the first type of S-SSB slot.

It may be learned that, according to this application, when LBT fails to be performed in a first type of S-SSB slot, the terminal device may perform LBT in one or more of second type of S-SSB slots.

It should be noted that if the terminal device successfully performs LBT in the second S-SSB slot, the terminal device may decide, based on implementation, whether to perform LBT in remaining some or all of second type of S-SSB slots.

In related technologies, if the terminal device fails to perform LBT in a first type of S-SSB slot, that is, the terminal device cannot successfully transmit an S-SSB in the first type of S-SSB slot, it is unclear whether the terminal device is to perform LBT in a second type of S-SSB slot corresponding to the first type of S-SSB slot, resulting in some problems. For example, if the terminal device decides not to perform LBT in a second type of S-SSB slot, the terminal device does not transmit an S-SSB within a current S-SSB period, which directly affects synchronization performance of sidelink, resulting a failure in synchronization between the terminal device and another terminal device. According to this application, in a case in which LBT fails to be performed in some or all of RB sets in the first S-SSB slot, the terminal device may decide to perform LBT in a second type of S-SSB slot (that is, the second S-SSB slot) corresponding to the first S-SSB slot, so as to transmit an S-SSB within the S-SSB period as much as possible, thereby implementing synchronization between the terminal device and another terminal device as much as possible.

It should be noted that if after the terminal device performs LBT in some or all of RB sets in the second S-SSB slot, a plurality of RB sets may be available, the terminal device may occupy the plurality of RB sets to transmit S-SSBs by repeated mapping.

A technical solution for performing LBT by the terminal device in the second S-SSB slot in a case in which the terminal device fails to perform LBT in all RB sets in the first S-SSB slot is described in detail below with reference to the example shown in FIG. 22. In FIG. 22, according to system configuration/pre-configuration, a frequency domain resource includes a total of four RB sets, with IDs of the four RB sets being 0, 1, 2, and 3 (represented as an RB set 0, an RB set 1, an RB set 2, and an RB set 3 in FIG. 22), respectively. The terminal device may transmit S-SSBs in the RB set 0, the RB set 1, and the RB set 2, and may not transmit and/or receive an S-SSB in the RB set 3. That is, the RB set 3 is not used to transmit an S-SSB. In time domain, one S-SSB period contains two sets of S-SSB slot resources, one for transmitting an S-SSB and the other for receiving an S-SSB.

It should be noted that all embodiments provided in this application are described based on one set of the two sets of S-SSB slot resources. It may be understood that the method provided in embodiments of this application may also be implemented for the other set of S-SSB slot resources.

As shown in FIG. 22, a slot s1 is a first type of S-SSB slot, and slots s2, s3, and s4 are second type of S-SSB slots. In FIG. 22, the slot s1 may be a first S-SSB slot, and the slots s2, s3, and s4 may be second S-SSB slots. By default, the terminal device is required to attempt to transmit an S-SSB in a first type of S-SSB slot. That is, the terminal device needs to perform LBT in each of the RB set 0, the RB set 1, and the RB set 2 in the slot s1 to check whether the resource is available. In FIG. 22, the three RB sets in the slot s1 are occupied/unavailable. Therefore, the terminal device cannot transmit an S-SSB in any of the RB sets corresponding to the slot s1.

Since the terminal device transmits no S-SSB in the slot s1, the terminal device may attempt to transmit an S-SSB in at least one second type of S-SSB slot corresponding to the slot s1. The terminal device may first perform LBT in each of three RB sets in a second type of S-SSB slot s2. As shown in FIG. 22, the terminal device detects that all the three RB sets in the slot s2 are available. Therefore, the terminal device occupies the three RB sets to transmit S-SSBs in the slot s2 by repeated mapping.

The terminal device has transmitted S-SSBs in one second type of S-SSB slot, compensating for the loss of transmitting no S-SSB in the slot s1. For the subsequent second type of S-SSB slots s3 and s4, the terminal device may decide, based on implementation, whether to continue to transmit an S-SSB. For example, the terminal device may attempt to transmit S-SSBs in the slots s3 and s4. The terminal device may first perform LBT in each of three RB sets corresponding to each slot and determine, based on a detection result for the LBT, whether the corresponding RB set is available. Then, the terminal device may map and transmit an S-SSB in an available RB set. Alternatively, the terminal device may decide not to attempt to transmit any S-SSBs in the slots s3 and s4. Therefore, the terminal device may not perform any LBT operations in the two slots to attempt to transmit S-SSBs.

In some embodiments, the terminal device may preferentially perform LBT in a target RB set in the first S-SSB slot. In other words, the terminal device may preferentially attempt to map and transmit an S-SSB in the target RB set in the first S-SSB slot. Alternatively, the terminal device is required to attempt to map and transmit an S-SSB in at least the target RB set in the first S-SSB slot. That is, in a case that an S-SSB is successfully transmitted in the target RB set in the first S-SSB slot, the terminal device may not perform LBT in RB sets other than the target RB set in the first S-SSB slot.

In some embodiments, the terminal device may preferentially transmit an S-SSB in the target RB set in the first S-SSB slot. In other words, the terminal device is required to map and transmit an S-SSB in at least the target RB set. For example, the terminal device may perform LBT in all RB sets in the first S-SSB slot. If LBT is successfully performed in the target RB set, an S-SSB is transmitted in the target RB set. If LBT is successfully performed in another RB set different from the target RB set, an S-SSB may be transmitted in the RB set. If LBT fails to be performed, no S-SSB may be transmitted in the RB set. The terminal device may decide whether to transmit an S-SSB in another RB set based on implementation.

For example, a frequency domain resource corresponding to the slot s1 includes N (N > 1) RB sets. The terminal device is required to transmit an S-SSB in at least the target RB set. If after LBT is performed in the target RB set, it is determined that an S-SSB can be transmitted in the target RB set, the terminal device may perform the following two operations for RB sets other than the target RB set in the first slot. First operation: the terminal device performs LBT in at least one of the other RB sets. If the terminal device detects that at least one RB set subjected to LBT is available, the terminal device transmits an S-SSB in the at least one RB set. Second operation: the terminal device performs LBT in any of the other RB sets. In a case that the RB set is unavailable, the terminal device does not transmit an S-SSB in the RB set.

A frequency domain location of the target RB set may be known to both a receiver and a transmitter of the S-SSB. Therefore, the receiver of the S-SSB may also preferentially receive the S-SSB in the target RB set. Optionally, the frequency domain location of the target RB set is configured, pre-configured, or preset by a network device. In other words, the receiver and the transmitter of the S-SSB may determine a location of the target RB set through pre-configured and/or predefined values. In some embodiments, the target RB set may also be referred to as an anchor (anchor) RB set.

Optionally, the method described in FIG. 21 may further include step S2103. Step S2103 may be performed by the network device and the terminal device.

In step S2103, the network device transmits configuration information to the terminal device. The configuration information may be used to configure or indicate the frequency domain location of the target RB set.

Since the receiving terminal device of S-SSBs does not know in which RB set(s) a transmitting terminal device of S-SSBs transmits an S-SSB, the receiving terminal device may need to detect/receive S-SSBs in all RB sets. This results in higher power consumption of the receiving terminal device, and also requires a capability of the receiving terminal device to support full-bandwidth reception. According to this application, the receiving terminal device of S-SSBs may preferentially receive the S-SSB in the target RB set, thereby avoiding a problem of higher power consumption caused due to attempting to detect or receive S-SSBs in all RB sets by the terminal device. In addition, as long as the receiving terminal device has at least a capability to support bandwidth reception corresponding to the target RB set, the receiving terminal device can detect/receive the S-SSB in most scenarios. In other words, according to this application, a low-capability terminal device (which supports only a portion of a full bandwidth) may know in advance that is is required to receive the S-SSB in the target RB set, so as to accurately receive the S-SSB, thereby implementing synchronization with another terminal device and thus implementing sidelink communication.

It should be noted that this application does not limit the frequency domain location of the target RB set. For example, the target RB set may be an RB set located at a central frequency.

It should be noted that the target RB set may include one or more RB sets, which is not limited in this application.

The some or all of RB sets, for which LBT fails, in the first S-SSB slot in step S2110 may include the target RB set. In other words, in a case in which LBT fails to be performed in the target RB set, the terminal device may perform the first operation. For example, the frequency domain resource corresponding to the first S-SSB slot may include N RB sets. N is an integer greater than 1. The terminal device is required to attempt to transmit an S-SSB in at least the target RB set. If LBT fails to be performed in the target RB set, the terminal device may perform the first operation.

It should be noted that when the terminal device successfully performs LBT in the target RB set in the first S-SSB slot, the terminal device may decide, based on implementation, whether to perform the first operation. For example, the first operation includes performing LBT in a second S-SSB slot. The terminal device may perform LBT in the second S-SSB slot, or may not perform LBT in the second S-SSB slot. Whether to perform LBT in the second S-SSB slot may depend on implementation of the terminal device.

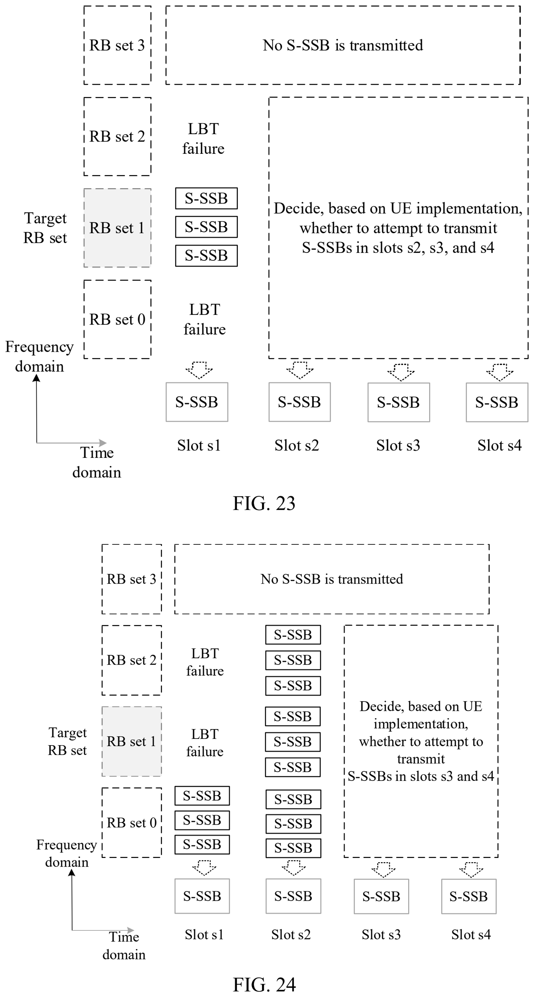

The target RB set is described below with reference to FIG. 23. In FIG. 23, according to system configuration/pre-configuration, a frequency domain resource includes a total of four RB sets, with IDs of the four RB sets being 0, 1, 2, and 3 (represented as an RB set 0, an RB set 1, an RB set 2, and an RB set 3 in FIG. 23), respectively. The terminal device may transmit S-SSBs in the RB set 0, the RB set 1, and the RB set 2, and may not transmit and/or receive an S-SSB in the RB set 3. That is, the RB set 3 is not used to transmit an S-SSB.

The first S-SSB slot may be a slot s1. As shown in FIG. 23, the target RB set is an RB set 1 in each S-SSB slot. The terminal device preferentially performs LBT in an RB set 1 in the slot s1. In FIG. 23, the terminal device fails to perform LBT in the RB set 0 and the RB set 2 in the slot s1. The terminal device may decide, based on implementation, whether to perform LBT in one or more of slots s2, s3, or s4.

In some embodiments, LBT may fail to be performed in the target RB set in the first S-SSB slot, that is, the terminal device detects that the target RB set in the first S-SSB slot is unavailable or occupied. That is, the some or all of RB sets in step S2110 may include the target RB set. In this case, the first operation performed by the terminal device may include: performing LBT in one or more RB sets other than the target RB set in the first S-SSB slot.

It may be understood that in a case that LBT fails to be performed in the target RB set, the terminal device may perform LBT in one or more RB sets other than the target RB set in the same S-SSB slot, to increase a probability of successfully transmitting an S-SSB. For example, in a case that LBT is successfully performed in a second RB set other than the target RB set in the first S-SSB slot, the terminal device may transmit an S-SSB in the second RB set. Alternatively, in a case that LBT fails to be performed in the second RB set, the terminal device may transmit no S-SSB in the second RB set. The solution is described below with reference to FIG. 24.

In FIG. 24, according to system configuration/pre-configuration, a frequency domain resource includes a total of four RB sets, with IDs of the four RB sets being 0, 1, 2, and 3 (represented as an RB set 0, an RB set 1, an RB set 2, and an RB set 3 in FIG. 24), respectively. The terminal device may transmit S-SSBs in the RB set 0, the RB set 1, and the RB set 2, and may not transmit and/or receive an S-SSB in the RB set 3. That is, the RB set 3 is not used to transmit an S-SSB.

The first S-SSB slot may be a slot s1. As shown in FIG. 24, the target RB set is an RB set 1 in each S-SSB slot. The terminal device fails to perform LBT in the RB set 1 in the first S-SSB slot. Therefore, the terminal device performs LBT in the RB set 0 and the RB set 2 in the first S-SSB slot. As shown in FIG. 24, LBT is successfully performed in the RB set, and the terminal device maps and transmits an S-SSB in the RB set 0 in the slot s1.

In some embodiments, LBT is successfully performed in the target RB set in the first S-SSB slot, but LBT fails to be performed in some or all of RB sets other than the target RB set in the first S-SSB slot. That is, the some or all of RB sets in step S2110 do not include the target RB set. In this case, the first operation may be determined based on implementation of the terminal device. For example, the terminal device may not perform LBT in another S-SSB slot within the S-SSB period where the first S-SSB slot is located. Alternatively, the terminal device may perform LBT in some or all of other S-SSBs within the S-SSB period.

In some embodiments, in a case that LBT fails to be performed in the target RB set in the first S-SSB slot, the first operation may include: performing LBT in a second S-SSB slot. For example, even if LBT is successfully performed in an RB set other than the target RB set in the first S-SSB slot, the terminal device may still perform LBT in the second S-SSB slot.

In some embodiments, in a case that the terminal device fails to perform LBT in the target RB set in the first S-SSB slot and successfully performs LBT (maps and transmits an S-SSB) in one or more of RB sets other than the target RB set in the first S-SSB slot, the terminal device is unnecessary to perform LBT in the second S-SSB slot. For example, the terminal device may decide, based on implementation, whether to perform LBT in the second S-SSB slot.

Referring to FIG. 24 again, the slot s1 is the first S-SSB slot, and the slot s2 may be the second S-SSB slot. As shown in FIG. 24, the terminal device fails to perform LBT in the target RB set in the slot s1. In some embodiments, the terminal device performs LBT in at least one of all RB sets in the slot s2. As shown in FIG. 24, since the terminal device performs LBT in the slot s2 and transmits S-SSBs in three RB sets, the terminal device may decide, based on implementation, whether to perform LBT in the slots s3 and s4. In some embodiments, since the terminal device transmits an S-SSB in the RB set 0 in the slot s1, the terminal device may decide, based on implementation, whether to attempt to transmit S-SSBs in the slots s2, s3, and s4.

In some implementations, the terminal device may preferentially perform LBT in the target RB set in the second S-SSB slot. For example, as long as the terminal device fails to perform LBT in the target RB set in the first S-SSB slot, the terminal device needs to perform LBT in the target RB set in the second S-SSB slot. That is, even if the terminal device successfully performs LBT in an RB set other than the target RB set in the first S-SSB slot and fails to perform LBT in the target RB set in the first S-SSB slot, the terminal device may perform LBT in the target RB set in the second slot. In other words, the terminal device may transmit an S-SSB in the target RB set in an S-SSB slot within the S-SSB period as much as possible. As described above, both the transmitting terminal device and the receiving terminal device of the S-SSB learn a time domain location of the target RB set. If LBT fails to be performed in the target RB set in the first S-SSB slot, the transmitting terminal device may further perform LBT in the target RB set in the second S-SSB slot, to attempt to transmit an S-SSB, thereby facilitating the receive terminal device in receiving the S-SSB in the target RB set in the second S-SSB slot.

It should be noted that if the terminal device successfully performs LBT in the target RB set in the second S-SSB slot, the terminal device may decide, based on implementation, whether to perform LBT in an RB set other than the target RB set in the second S-SSB slot.

Referring to FIG. 24 again, the slot s1 is the first S-SSB slot, and the slot s2 may be the second S-SSB slot. As shown in FIG. 24, the terminal device fails to perform LBT in the target RB set in the slot s1. Therefore, the terminal device preferentially performs LBT in the target RB set in the slot s2 (that is, an RB set 1 in the slot s2). For an RB set other than the target RB set in the slot s2, the terminal device may decide, based on implementation, whether to perform LBT in an RB set 2 and/or an RB set 3. As shown in FIG. 24, the terminal device decides to perform LBT in the RB set 2 and the RB set 3.

In related technologies, for the terminal device with a low capability described above, no S-SSB may be transmitted in an RB set (that is, the target RB set) where the receiving terminal device that needs to receive the S-SSB resides. The transmitting terminal device of the S-SSB may have transmitted the S-SSB in an RB set other than the RB set where the receiving terminal device resides. Based on this, the transmitting terminal device may consider that the S-SSB has been transmitted in a current S-SSB slot. Therefore, the receive terminal device may decide not to transmit an S-SSB in another S-SSB slot (for example, a second type of S-SSB slot) within the S-SSB period. This may result in the receiving terminal device being unable to receive the S-SSB within the current S-SSB period, and thus significantly affecting synchronization performance of the low capability terminal. In this application, the terminal device may perform LBT in the target RB set in each S-SSB slot within the S-SSB period, to transmit an S-SSB, thereby increasing a probability that the low-capability receiving terminal device receives the S-SSB in the target RB set, and further preventing reduction in synchronization performance of the low-capability terminal device as much as possible.

If LBT fails to be performed in the target RB set in the second S-SSB slot, the terminal device may perform the first operation by using the second S-SSB slot as the first S-SSB slot as described above. For example, the terminal device may perform LBT in at least one of RB sets other than the target RB set in the second S-SSB slot. In a case that LBT is successfully performed in at least one of the other RB sets, an S-SSB may be transmitted in the at least one RB set. In a case that LBT fails to be performed in at least one of the other RB sets, no S-SSB may be transmitted in the at least one RB set. Alternatively, the terminal device may perform LBT in a third S-SSB slot associated with the second S-SSB slot. The terminal device may also preferentially perform LBT in the target RB set in the third S-SSB slot.

If LBT is successfully performed in the target RB set in the second S-SSB slot, the terminal device may determine, based on implementation, whether to perform LBT in a remaining S-SSB slot within the S-SSB period.

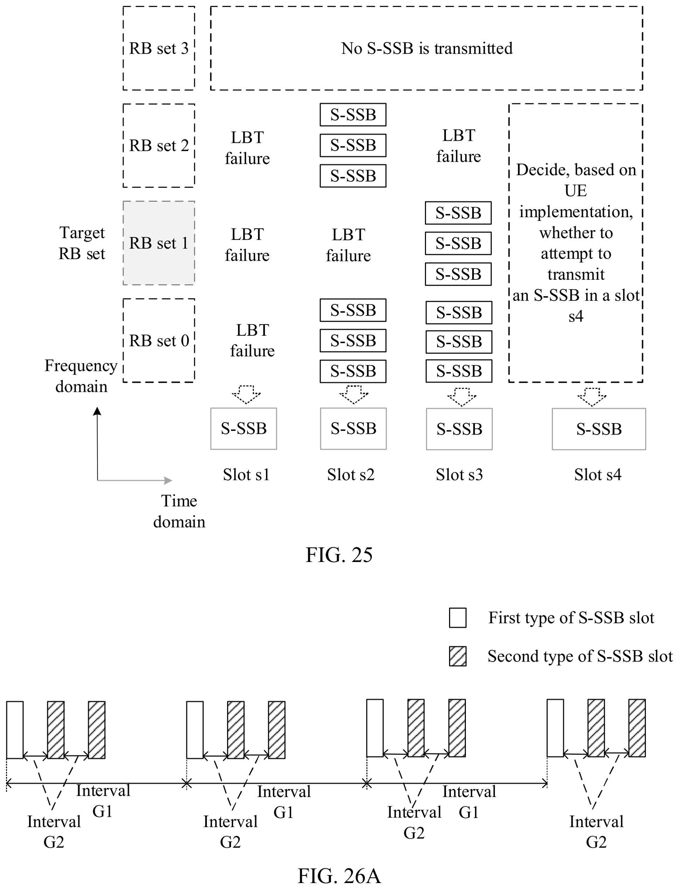

The following detailed description is provided by taking FIG. 25 as an example.

In FIG. 25, according to system configuration/pre-configuration, a frequency domain resource includes a total of four RB sets, with IDs of the four RB sets being 0, 1, 2, and 3 (represented as an RB set 0, an RB set 1, an RB set 2, and an RB set 3 in FIG. 25), respectively. The terminal device may transmit S-SSBs in the RB set 0, the RB set 1, and the RB set 2, and may not transmit and/or receive an S-SSB in the RB set 3. That is, the RB set 3 is not used to transmit an S-SSB. The RB set 1 is the target RB set.

In FIG. 25, the slot s1 may be the first S-SSB slot, and the slot s2 may be the second S-SSB slot. In some cases above, the terminal device performs LBT in the RB set 1 in the slot s2. However, LBT fails to be performed in the RB set 1 in the slot s2. In this case, the slot s2 may serve as the first S-SSB slot, and the slot s3 may serve as the second S-SSB slot. In some embodiments, when LBT fails to be performed in the RB set 1 in the slot s2, the terminal device may perform LBT in the slot s3. Further, the terminal device may preferentially perform LBT in an RB set 1 in the slot s3. Since the terminal device successfully performs LBT in the RB set 1 in the slot s3, the terminal device may determine, based on implementation, whether to perform LBT in the slot s4. In some embodiments, although LBT fails to be performed in the RB set 1 in the slot s2, the terminal device successfully performs LBT and transmits S-SSBs in an RB set 0 and the RB set 1 in the slot s2, that is, the terminal device successfully transmits S-SSBs in the slot s2, and the terminal device may decide, based on implementation, whether to perform LBT in the slot s3 and/or the slot s4.

There may be one or more S-SSB slots associated with the second S-SSB slot. For example, the second S-SSB slot may be associated with a first S-SSB slot set. The first S-SSB slot set may include one or more S-SSB slots. For example, the second S-SSB slot may belong to a first S-SSB period, and the first S-SSB slot set may include an S-SSB slot before the second S-SSB slot within the first S-SSB period.

This application does not limit a type of S-SSB slots included in the first S-SSB slot set. For example, in a case in which the first type of S-SSB slots may correspond to K second type of S-SSB slots, the first S-SSB slot set may include the first type of S-SSB slots and some or all of S-SSB slots of the K second type of S-SSB slots, and the second slot may be any one of the K second type of S-SSB slots. For example, the first S-SSB slot set may include the first type of S-SSB slots, or the first S-SSB slot set may include the first type of S-SSB slots and the second type of S-SSB slots. The second type of S-SSB slots included in the first S-SSB slot set may be second type of S-SSB slots before the second S-SSB slot.

Whether to perform LBT in the second S-SSB slot may be determined based on a result of LBT in the first S-SSB slot set associated with the second S-SSB slot. For example, in a case that the terminal device fails to perform LBT in some or all of RB sets in each S-SSB slot in the first S-SSB slot set, the terminal device may perform LBT in the second S-SSB slot. In other words, when LBT fails to be performed in all of S-SSB slots in the first S-SSB slot set, the terminal device may perform LBT in the second S-SSB slot. Alternatively, in a case that the terminal device fails to perform LBT in some or all of RB sets in any one of S-SSB slots in the first S-SSB slot set, the terminal device may perform LBT in the second S-SSB slot. In other words, in a case in which LBT fails to be performed in any one of S-SSB slots in the first S-SSB slot set, the terminal device may perform LBT in the second S-SSB slot. For example, in a case that the terminal device fails to perform LBT in the first type of S-SSB slots in the first S-SSB slot set, the terminal device may perform LBT in the second S-SSB slot.

For example, an S-SSB synchronization period may include the slots s1, s2, s3, s4, and the like. The slot s2, s3, or s4 may serve as the second S-SSB slot. If the second S-SSB slot is the slot s3, the terminal device may determine, based on the following implementation, whether to perform LBT and transmit an S-SSB in the slot s3. In an implementation, the first S-SSB slot may be the slot s1, and the terminal device may determine, based on whether LBT is successfully performed in the slot s1, whether to perform LBT in the slot s3. In another implementation, the first S-SSB slot may be the slot s1, and the terminal device may determine, based on whether LBT is successfully performed in the slot s1, whether to perform LBT in the slot s3. In another implementation, the first S-SSB slot may be the slot s2, and the terminal device may determine, based on whether LBT is successfully performed in the slot s2, whether to perform LBT in the slot s3. In another implementation, the first S-SSB slot set may include the slot s1 and the slot s2, and the terminal device may determine, based on whether LBT is successfully performed in the first S-SSB slot set, whether to perform LBT in the slot s3. If the second S-SSB slot is the slot s4, the terminal device may perform an operation similar to that performed for the slot s3. In an implementation, whether to perform LBT in the slot s4 may be determined based on whether LBT is successfully performed in the slot s1. In another implementation, the first S-SSB slot set may include the slots s1, s2, and s3, and the terminal device may determine, based on whether LBT is successfully performed in the slots s1, s2, and s3, whether to perform LBT in the slot s4. The terminal device may also determine, based on implementation, whether to perform LBT and S-SSB transmission in the slot s3 or s4.

For example, if LBT fails to be performed in all of RB sets in each S-SSB slot in the first S-SSB slot set, the terminal device may perform LBT in the second S-SSB slot. In other words, if LBT fails to be performed in all of RB sets in each of all of S-SSB slots in the first S-SSB slot set, the terminal device may perform LBT in the second S-SSB slot.

For example, if LBT fails to be performed in the target RB set in each S-SSB slot in the first S-SSB slot set, the terminal device may perform LBT in the second S-SSB slot. In other words, as long as LBT fails to be performed in the target RB set in all of S-SSB slots in the first S-SSB slot set, the terminal device may perform LBT in the second S-SSB slot. That is, whether to perform LBT in the second S-SSB slot may be determined without considering an LBT result for RB sets other than the target RB set in the S-SSB slots of the first S-SSB slot set.

In some embodiments, the second S-SSB slot may belong to a second S-SSB slot set. S-SSB slots in the second S-SSB slot set may all be second type of S-SSB slots. The process of performing LBT in a second S-SSB slot as described above may include: performing LBT in one or more S-SSB slots in the second S-SSB slot set. In other words, in a case in which LBT is required to be performed in the second S-SSB slot, the terminal device may perform LBT in one or more S-SSB slots in the second S-SSB slot set.

It should be noted that the first S-SSB slot set and the second S-SSB slot set may belong to a same S-SSB period.

The technical solutions related to the first S-SSB slot set and the second S-SSB slot set may be implemented in combination. For example, one S-SSB period may include L+H S-SSB slots. L may denote a quantity of S-SSB slots in the first S-SSB slot set, and H may denote a quantity of S-SSB slots in the second S-SSB slot set. Alternatively, the first S-SSB slot set and the second S-SSB slot set may form an S-SSB slot set group, and a same S-SSB period may include P S-SSB slot set groups. In other words, one S-SSB period may include $P \times (L+H)$ S-SSB slots. L may denote a quantity of S-SSB slots in a first S-SSB slot set in one S-SSB slot set group, H may denote a quantity of S-SSB slots in a second S-SSB slot set in one S-SSB slot set group, and P may denote a quantity of S-SSB slot set groups.

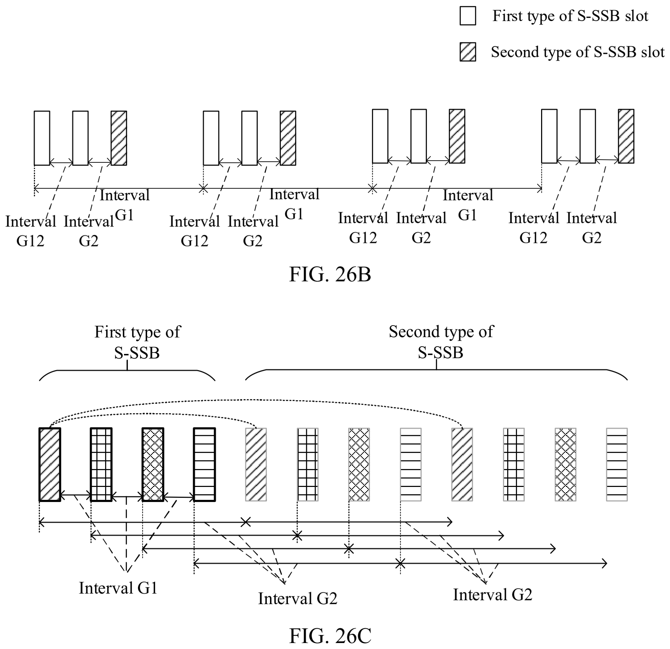

The first S-SSB slot set and the second S-SSB slot set are described below with reference to FIG. 26A and FIG. 26B.

As shown in FIG. 26A, the first S-SSB period includes four S-SSB slot set groups, that is, P = 4. One S-SSB slot set group includes one first type of S-SSB slot and two second type of S-SSB slots. For example, in one S-SSB slot set group, a first S-SSB slot set may include one first type of S-SSB slot, and a second S-SSB slot set may include two second type of S-SSB slots, that is, L = 1, and H = 2. Alternatively, in one S-SSB slot set group, a first S-SSB slot set may include one first type of S-SSB slot and one second type of S-SSB slot; and a second S-SSB slot set may include another second type of S-SSB slot, that is, L = 2, and H = 1.

As shown in FIG. 26B, the first S-SSB period includes four S-SSB slot set groups, that is, P = 4. One S-SSB slot set group includes two first type of S-SSB slots and one second type of S-SSB slot. The one second type of S-SSB slot corresponds to the two first type of S-SSB slots. For example, in one S-SSB slot set group, a first S-SSB slot set may include two first type of S-SSB slots, and a second S-SSB slot set may include one second type of S-SSB slot, that is, L = 2, and H = 1.

In some embodiments, within one S-SSB period, the terminal device may decide, based on whether an S-SSB is successfully transmitted in first L S-SSB slots, whether to transmit S-SSBs (or attempt to perform LBT) in subsequent H S-SSB slots. For example, if no S-SSB is transmitted (it is detected, by performing LBT, that there is no available resources) in first L S-SSB slots, the terminal device needs to transmit an S-SSB (perform LBT to detect whether an S-SSB can be transmitted) in at least one of subsequent H slots. Alternatively, if an S-SSB is successfully transmitted in at least one of first L S-SSB slots, the terminal device may decide, based on implementation, whether to transmit S-SSBs in subsequent H slots. Referring to FIG. 26B again, the terminal device may decide, based on whether an S-SSB is successfully transmitted in first L=2 S-SSB slots in one S-SSB slot set group, whether to transmit S-SSBs in subsequent H=1 S-SSB slot.

In some embodiments, an interval between the first type of S-SSB slots may be indicated by a first interval. An interval between the first type of S-SSB slot and the second type of S-SSB slot may be indicated by a second interval. An interval between a plurality of second type of S-SSB slots corresponding to a same first type of S-SSB slot may be indicated by a third interval. One or more of the first interval, the second interval, or the third interval may be configured, pre-configured, or preset by the network device. For example, the configuration information in step S2103 may be used to configure one or more of the first interval, the second interval, or the third interval.

It should be noted that the second interval may be the same as the third interval. In other words, the second interval may be represented by the third interval, or the third interval may be represented by the second interval.

It should be noted that the second interval and/or the third interval may be greater than or equal to 0. For example, the second interval and/or the third interval may be an integer greater than or equal to 0.

It should be noted that this application does not limit a value of the first interval, the second interval, or the third interval. For example, the first interval may be greater than the second interval or the third interval. Alternatively, the first interval may be less than the second interval or the third interval.

The first interval, the second interval, and the third interval are described below with reference to FIG. 26A, FIG. 26B, and FIG. 26C. In FIG. 26A and FIG. 26C, a set of S-SSB slot resources within one S-SSB period includes four first type of S-SSB slots, and two second type of S-SSB slots are configured/pre-configured for each first type of S-SSB slot. Both the second interval and the third interval are represented by an interval G2. The first interval is represented by an interval G1. In FIG. 26B, a set of S-SSB slot resources within one S-SSB period includes four first type of S-SSB slots, and one second type of S-SSB slot is configured/pre-configured for every two first type of S-SSB slots. Both the second interval and the third interval are represented by an interval G2. The first interval includes an interval G12 between a plurality of first type of S-SSB slots corresponding to a same second type of S-SSB slot and an interval G1 between a plurality of first type of S-SSB slots corresponding to different second type of S-SSB slots.

During configuration/pre-configuration of second type of S-SSB slots, parameters 1 and 2 need to be configured, pre-configured, or preset. The parameter 1 may be used to indicate that one first type of S-SSB slot corresponds to Q second type of S-SSB slots. The parameter 2 may be used to indicate an interval G2 between a first type of S-SSB slot and a second type of S-SSB slot corresponding to the first type of S-SSB slot. The parameter 2 may indicate a value of 0 or a non-zero. In FIG. 26A, FIG. 26B, and FIG. 26C, a set of S-SSB resources within one S-SSB period includes four first type of S-SSBs, and an interval between the first type of S-SSB slots and second type of S-SSB slots corresponding to the first type of S-SSB slots is denoted by G2.

As shown in FIG. 26A, the interval G1 is greater than the interval G2. The first type of S-SSB slots and the second type of S-SSB slots corresponding to the first type of S-SSB slots may be consecutive. The second type of S-SSB slots may be interspersed between the first type of S-SSB slots.

As shown in FIG. 26C, the interval G1 is less than the interval G2. The first type of S-SSB slots and the second type of S-SSB slots corresponding to the first type of S-SSB slots may be non-consecutive. In other words, another first type of S-SSB slot may be located between the first type of S-SSB slots and the second type of S-SSB slots corresponding to the first type of S-SSB slots. No second type of S-SSB slot may be interspersed between the first type of S-SSB slots. The second type of S-SSB slots may be after all first type of S-SSB slots within a same S-SSB period.

In some embodiments, the terminal device may perform the first operation based on one or more of the following information: a scenario where the terminal device is located; or a type of a service to be performed by the terminal device. For example, the terminal device may decide to perform the first operation based on a scenario and/or a type of a service and implementation of the terminal device.

Optionally, the terminal device may decide, based on implementation, whether to transmit an S-SSB (that is, perform LBT) in the second S-SSB slot.

In some embodiments, the first S-SSB slot may belong to a first S-SSB synchronization period. The first S-SSB synchronization period may include a COT. The first S-SSB synchronization period including a COT may indicate: the first S-SSB synchronization period being partially or fully overlapped with the COT.

The terminal device may transmit or attempt to transmit an S-SSB in a first RB set included within the COT. For example, the terminal device may perform LBT in the first RB set. In a case that LBT is successfully performed, the terminal device may transmit an S-SSB in the first RB set.

It should be noted that this application does not limit a type of an S-SSB slot to which the first RB set belongs. For example, the first RB set may belong to the first type of S-SSB slots or the second type of S-SSB slots.

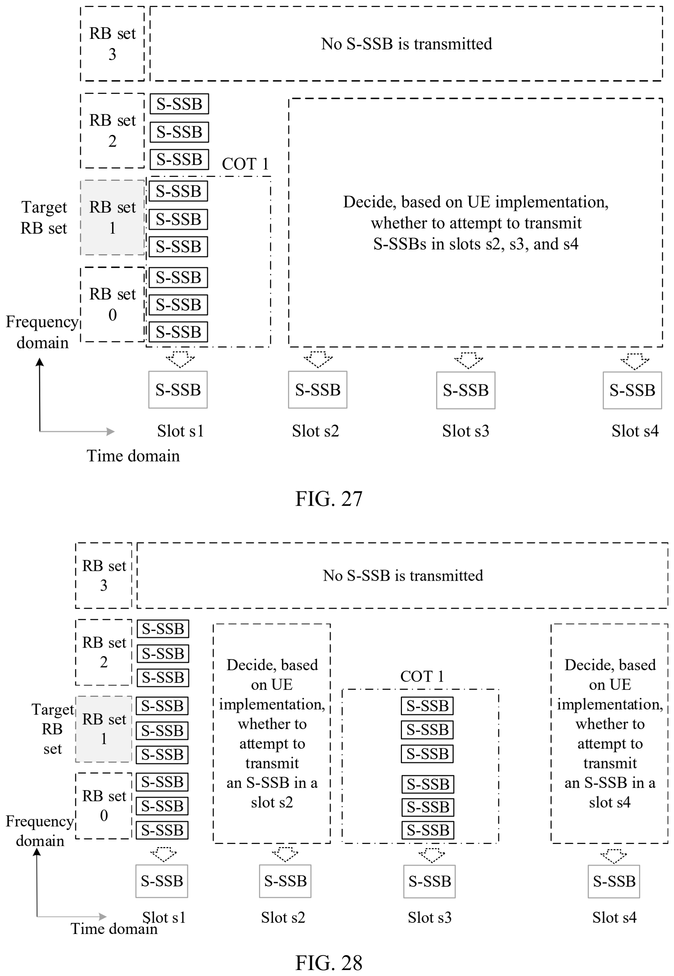

As shown in FIG. 27, a COT 1 includes the slot s1 in time domain. The COT 1 includes an RB set 0 and an RB set 1 in frequency domain. When the terminal device attempts to transmit an S-SSB in the slot s1, the terminal device needs to attempt to transmit S-SSBs in at least an RB set 0 and an RB set 1 in frequency domain. As shown in FIG. 27, in the slot s1, the terminal device plans to attempt to transmit S-SSBs in an RB set 0, an RB set 1, and an RB set 2 according to the above embodiment provided in this application. Therefore, the terminal device only needs to perform LBT and transmit S-SSBs in the three RB sets according to original configuration/pre-configuration.

As shown in FIG. 28, a COT 1 includes second type of S-SSB slots in time domain. The terminal device has successfully transmitted S-SSBs in RB sets (including the target RB set) in the first type of S-SSB slots s1. According to configuration/pre-configuration, the terminal device may decide, based on implementation, whether to attempt to transmit S-SSBs in the slots s2, s3, and s4. Since the COT 1 includes the slot s3, the terminal device may attempt to transmit an S-SSB in the slot s3. In addition, since the COT 1 includes the RB set 0 and the RB set 1, the terminal device may perform LBT and transmit S-SSBs in the two RB sets.

If the terminal device does not transmit an S-SSB in the first RB set, it may result in discontinuity of the COT in the first RB set. During the non-continuous time period, a resource corresponding to the COT may be preempted by a device from another system, causing the terminal device to lose the resource corresponding to the COT, and thus resulting in the terminal device being unable to continue to transmit data. According to this application, LBT may be performed and an S-SSB may be transmitted in the first RB set included within the COT, thereby occupying the resource corresponding to the COT, and preventing preemption by another system.

In some embodiments, the first RB set may be configured or pre-configured as an RB set where no S-SSB is transmitted. Alternatively, the first RB set is not a configured or pre-configured RB set where the terminal device attempts to transmit an S-SSB. In other words, even if the RB set is configured or pre-configured not to transmit an S-SSB and in a case in which the COT includes the RB set, the terminal device may still attempt to transmit an S-SSB in the RB set.

It should be noted that in some embodiments, if the first RB set is configured or pre-configured as an RB set where no S-SSB is transmitted, the terminal device may decide, based on implementation, whether to attempt to transmit an S-SSB in the first RB set.

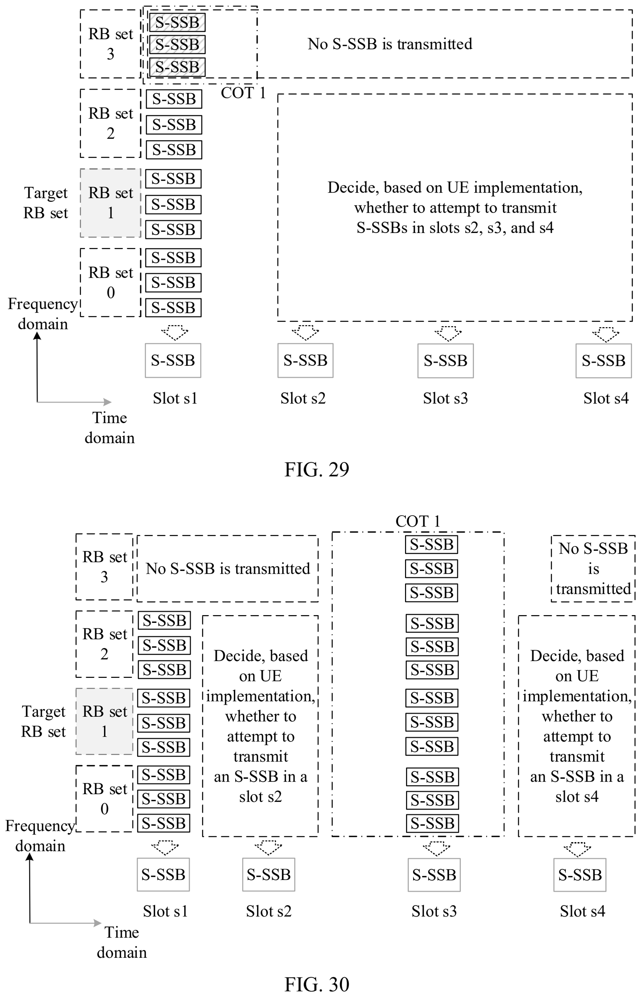

As shown in FIG. 29, when the COT includes a slot s1 in time domain, an RB set 3 included in frequency domain is not a configured or pre-configured RB set where the terminal device attempts to perform transmission. In some embodiments, the terminal device may additionally attempt to perform LBT and transmit an S-SSB in the RB set 3 corresponding to the slot s1. In some embodiments, the terminal device may decide, based on implementation, whether to attempt to transmit an S-SSB in the RB set 3 corresponding to the slot s1.

In some embodiments, the terminal device may perform LBT in all RB sets included within the COT. For example, the terminal device may perform LBT in all RB sets included within the COT in the first S-SSB synchronization period, thereby avoiding loss of the resource corresponding to the COT in the first S-SSB synchronization period.

For example, the first RB set may belong to a first BWP. The first BWP may include N RB sets. If the COT includes $Q$ ($Q \le N$) RB sets in frequency domain, the terminal device may perform LBT in the Q RB sets in a corresponding S-SSB slot. If it is detected that resources in the Q RB sets are available, the terminal device may transmit an S-SSB in the Q RB sets in the corresponding slot. If at least one of the Q RB sets is occupied, the terminal device may transmit an S-SSB in an RB set where LBT is successfully performed.

As shown in FIG. 30, the terminal device has successfully transmitted S-SSBs in RB sets (including the target RB set) in the first type of S-SSB slots s1. According to configuration/pre-configuration, the terminal device may decide, based on implementation, whether to attempt to transmit S-SSBs in the slots s2, s3, and s4. Since the COT 1 includes the second type of S-SSB slot s3 in time domain, the terminal device may attempt to transmit an S-SSB in the slot s3. In addition, since the COT 1 includes the RB set 0, the RB set 1, the RB set 2, and the RB set 3, the terminal device may perform LBT and transmit S-SSBs in the four RB sets.

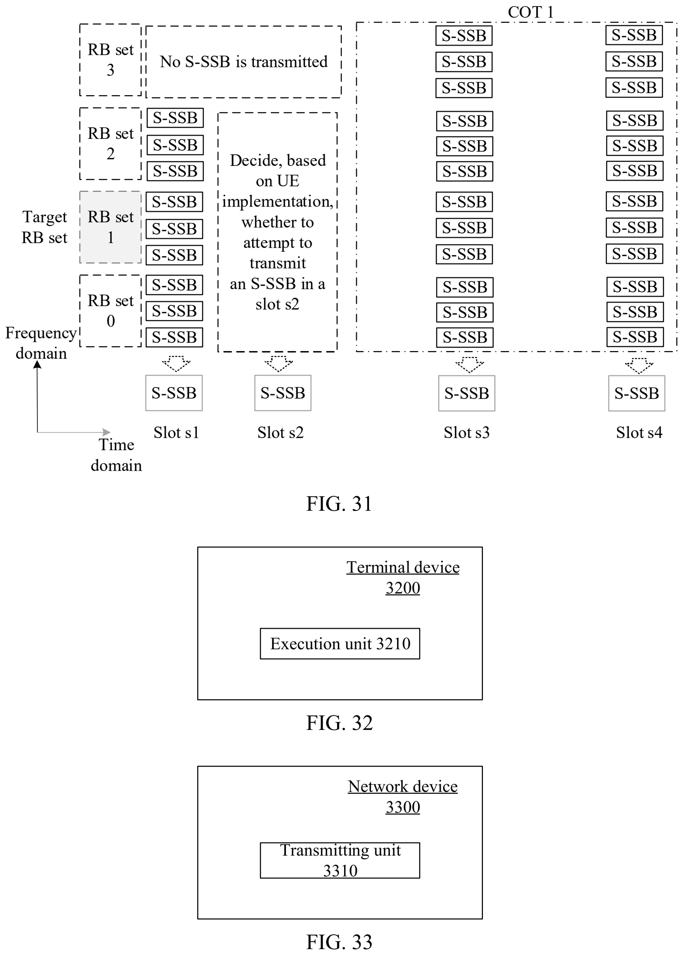

As shown in FIG. 31, the terminal device has successfully transmitted S-SSBs in RB sets (including the target RB set) in the first type of S-SSB slots s1. According to configuration/pre-configuration, the terminal device may decide, based on implementation, whether to attempt to transmit S-SSBs in the slots s2, s3, and s4. Since the COT 1 includes the second type of S-SSB slots s3 and s4 in time domain, the terminal device may attempt to transmit S-SSBs in the slots s3 and s4. In addition, since the COT 1 includes the RB set 0, the RB set 1, the RB set 2, and the RB set 3, the terminal device may perform LBT and transmit S-SSBs in the four RB sets.

In some embodiments, the first RB set may belong to a first BWP. The terminal device may perform LBT in all RB sets included within the first BWP. The first BWP may also be replaced with a first bandwidth or a first carrier.

For example, the first BWP may include N RB sets. The COT includes Q RB sets within the first BWP. Q is less than or equal to N. Both Q and N may be positive integers. In the first BWP, the terminal device may perform LBT in all of N RB sets within the first BWP. If there are available resources in the N RB sets, the terminal device may transmit an S-SSB in a corresponding RB set. Alternatively, if at least one RB set of the N RB sets is occupied, the terminal device may transmit an S-SSB in another RB set.

After the terminal device performs LBT in the first S-SSB slot and if LBT is successfully performed in Y RB sets in the first S-SSB slot, the terminal device may further determine, based on transmit powers for transmitting S-SSBs in the Y RB sets, in which RB set(s) in the Y RB sets to transmit an S-SSB. Y may be an integer greater than 1.

In some embodiments, the terminal device may transmit S-SSBs in some or all of the Y RB sets based on a first power. The first power is a sum of transmit powers for transmitting S-SSBs in all of the Y RB sets. In other words, the first power may be a total power for transmitting S-SSBs in the Y RB sets in the first S-SSB slot.

The terminal device may determine, based on a result of comparison between the first power and a maximum transmit power limit, in which RB set(s) in the Y RB sets to transmit an S-SSB. For example, in a case in which the first power is less than or equal to the maximum transmit power limit, the terminal device may transmit S-SSBs in all of the Y RB sets. For another example, in a case in which the first power is greater than or equal to the maximum transmit power limit, the terminal device may transmit S-SSBs in some of the Y RB sets. A sum of transmit powers for transmitting S-SSBs in some of the Y RB sets is less than or equal to the maximum transmit power limit.

It may be understood that if the first power is greater than or equal to the maximum transmit power limit, the terminal device may discard Q RB sets from the Y RB sets, that is, the terminal device does not map or transmit S-SSBs in the Q RB sets, so that a total transmit power for mapping and transmitting S-SSBs in Y-Q RB sets is less than or equal to the maximum transmit power limit. Q may be a positive integer greater than 0.

The terminal device may determine, based on a priority associated with an RB set, whether to discard the RB set. In a case in which a priority of an RB set is higher, the terminal device preferentially selects the RB set to map and transmit an S-SSB in the selected RB set. In a case in which a priority of an RB set is lower, the terminal device preferentially discards the RB set. For example, the terminal device may begin discarding from an RB set with the lowest priority. If a total transmit power for remaining RB sets is still greater than or equal to the maximum transmit power limit, the terminal device may continue to discard an RB set with the lowest priority from the remaining RB sets, until a total transmit power for the remaining RB sets is less than or equal to the maximum transmit power limit. Alternatively, the terminal device may begin selection from an RB set with the highest priority. When a quantity of selected RB sets reaches Y-Q, the terminal device stops selection, and maps and transmits an S-SSB by using the selected RB set.

It should be noted that for RB sets with a same priority, the terminal device may randomly select or discard the RB sets, or the terminal device may determine, based on identification information, frequency, or other information, to select or discard the RB sets.

In some embodiments, a priority may be related to one or more of following information about an RB set: whether the RB set is the target RB set; or whether the RB set belongs to a COT. For example, a priority may satisfy one or more of the following: a priority of a target RB set is higher than a priority of a non-target RB set; a priority of a target RB set is higher than a priority of an RB set that belongs to a COT; a priority of an RB set that belongs to a COT is higher than a priority of an RB set that does not belong to the COT; or a priority of an RB set that belongs to a COT is higher than a priority of a target RB set.

For example, priorities of the RB sets may be set in a descending order: target RB set > RB set that belongs to the COT > RB set that is not the target RB set and does not belong to the COT. Alternatively, priorities of the RB sets may be set in a descending order: target RB set > non-target RB set. Alternatively, priorities of the RB sets may be set in a descending order: RB set that belongs to the COT > RB set that does not belong to the COT.

It should be noted that a priority of an RB set that is located between an RB set that belongs to the COT and the target RB set may be higher than a priority of an RB set that is not the target RB set and does not belong to the COT. For example, after an RB set that belongs to the COT and the target RB set are selected, an RB set may be randomly selected from remaining RB sets, or an RB set that is located between an RB set that belongs to the COT and the target RB set is preferentially, selected from remaining RB sets.

The foregoing describes the method embodiments of this application in detail. The following describes apparatus embodiments of this application in detail. It should be understood that the description of the method embodiments corresponds to the description of the apparatus embodiments, and therefore, for parts that are not described in detail herein, reference may be made to the foregoing method embodiments.

FIG. 32 is a schematic structural diagram of a terminal device 3200 according to an embodiment of this application. The terminal device 3200 may include an execution unit 3210.

The execution unit 3210 is configured to: in a case that a terminal device fails to perform LBT in some or all of RB sets in a first S-SSB slot, perform a first operation.

In some embodiments, the terminal device is further configured to: preferentially perform LBT in a target RB set in the first S-SSB slot.

In some embodiments, a frequency domain location of the target RB set is configured, pre-configured, or preset by a network device.

In some embodiments, the process of failing to perform LBT in some or all of RB sets in a first S-SSB slot includes:

failing to perform LBT in a target RB set in the first S-SSB slot; and the first operation includes: performing LBT in one or more RB sets other than the target RB set in the first S-SSB slot.

In some embodiments, the process of failing to perform LBT in some or all of RB sets in a first S-SSB slot includes: failing to perform LBT in a target RB set in the first S-SSB slot; and the first operation includes: performing LBT in a second S-SSB slot, where the second S-SSB slot is associated with the first S-SSB slot.

In some embodiments, the process of performing LBT in a second S-SSB slot includes: preferentially performing LBT in a target RB set in the second S-SSB slot.

In some embodiments, the first S-SSB slot belongs to a first S-SSB slot set, the second S-SSB slot is associated with the first S-SSB slot set, and the process of failing to perform LBT in some or all of RB sets in a first S-SSB slot includes: failing to perform LBT in some or all of RB sets in each S-SSB slot in the first S-SSB slot set; or failing to perform LBT in some or all of RB sets in any one of S-SSB slots in the first S-SSB slot set.

In some embodiments, the process of failing to perform LBT in some or all of RB sets in each S-SSB slot includes: failing to perform LBT in a target RB set in each S-SSB slot.

In some embodiments, the second S-SSB slot belongs to a second S-SSB slot set, and the process of performing LBT in a second S-SSB slot includes: performing LBT in one or more of S-SSB slots in the second S-SSB slot set.

In some embodiments, the first S-SSB slot set and the second S-SSB slot set belong to a same S-SSB synchronization period.

In some embodiments, the first S-SSB slot set and the second S-SSB slot set form an S-SSB slot set group, and the same S-SSB synchronization period includes P S-SSB slot set groups, where P is a positive integer.

In some embodiments, the first S-SSB slot set includes first type of S-SSB slots; or the first S-SSB slot set includes first type of S-SSB slots and second type of S-SSB slots; and the second S-SSB slot set includes second type of S-SSB slots, where the second type of S-SSB slots are supplementary candidate slots for the first type of S-SSB slots.

In some embodiments, the first S-SSB slot is a first type of S-SSB slot or a second type of S-SSB slot; the second S-SSB slot is a second type of S-SSB slot, where the second type of S-SSB slot is a supplementary candidate slot for the first type of S-SSB slot.

In some embodiments, one or more of the following parameters are configured, pre-configured, or preset by a network device: a first interval, used to indicate an interval between first type of S-SSB slots; a second interval, used to indicate an interval between a first type of S-SSB slot and a second type of S-SSB slot corresponding to the first type of S-SSB slot; or a third interval, used to indicate an interval between a plurality of second type of S-SSB slots corresponding to a same first type of S-SSB slot.

In some embodiments, the first S-SSB slot and the second S-SSB slot belong to a same S-SSB synchronization period.

In some embodiments, the execution unit 3210 is configured to: perform, by the terminal device, the first operation based on one or more of the following information: a scenario where the terminal device is located; or a type of a service to be performed by the terminal device.

In some embodiments, the first S-SSB slot belongs to a first S-SSB synchronization period, and in a case in which the first S-SSB synchronization period includes a channel occupancy time COT, the terminal device is further configured to: perform LBT in a first RB set included within the COT.

In some embodiments, the first RB set is configured or pre-configured RB set where no S-SSB is transmitted.

In some embodiments, the process of performing LBT in a first RB set included within the COT includes: performing, by the terminal device, LBT in all RB sets included within the COT.

In some embodiments, the first RB set belongs to a first BWP, and the process of performing LBT in a first RB set included within the COT includes: performing LBT in all RB sets included within the first BWP.

In some embodiments, the terminal device is further configured to: in a case that the terminal device successfully performs LBT in Y RB sets in the first S-SSB slot, transmit S-SSBs in some or all of the Y RB sets by using a first power. The first power is a sum of transmit powers for transmitting S-SSBs in all of the Y RB sets, and Y is an integer greater than 1.

In some embodiments, the process of transmitting S-SSBs in some or all of the Y RB sets by using a first power includes: in a case in which the first power is less than or equal to a maximum transmit power limit, transmitting, by the terminal device, S-SSBs in all of the Y RB sets; and/or in a case in which the first power is greater than or equal to the maximum transmit power limit, transmitting S-SSBs in some of the Y RB sets, where a sum of transmit powers for transmitting S-SSBs in some of the Y RB sets is less than or equal to the maximum transmit power limit.

In some embodiments, the process of transmitting S-SSBs in some of the Y RB sets includes: preferentially transmitting an S-SSB in an RB set with a higher priority in the Y RB sets, where the priority is related to one or more of the following information about the RB set: whether the RB set is a target RB set; or whether the RB set belongs to a COT.

In some embodiments, a priority satisfies one or more of the following: a priority of a target RB set is higher than a priority of a non-target RB set; a priority of a target RB set is higher than a priority of an RB set that belongs to a COT; or a priority of an RB set that belongs to a COT is higher than a priority of an RB set that does not belong to the COT.

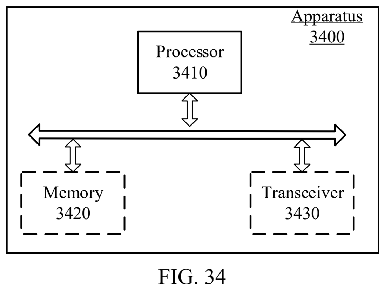

In an optional embodiment, the execution unit 3210 may be a processor 3410. The terminal device 3200 may

**EP 4 654 729 A1**

further include a memory 3420 and a transceiver 3430, as shown in FIG. 34.

FIG. 33 is a schematic structural diagram of a network device 3300 according to an embodiment of this application. The network device 3300 includes a transmitting unit 3310.

The transmitting unit 3310 is configured to transmit configuration information to a terminal device, where the configuration information is used to configure one or more of the following information: first information, used to indicate a frequency domain location of a target RB set, where the target RB set is an RB set, in which the terminal device preferentially performs LBT, in an S-SSB slot; a first interval, used to indicate an interval between first type of S-SSB slots; a second interval, used to indicate an interval between a first type of S-SSB slot and a second type of S-SSB slot, and the second type of S-SSB slot is a supplementary candidate slot for the first type of S-SSB slot; or a third interval, used to indicate an interval between a plurality of second type of S-SSB slots corresponding to a same first type of S-SSB slot.

In an optional embodiment, the transmitting unit 3310 may be a transceiver 3430. The network device 3300 may further include the processor 3410 and the memory 3420, as shown in FIG. 34.

FIG. 34 is a schematic structural diagram of an apparatus used for communication according to an embodiment of this application. The dashed lines in FIG. 34 indicate that the unit or module is optional. The apparatus 3400 may be configured to implement the method described in the foregoing method embodiments. The apparatus 3400 may be a chip, a terminal device, or a network device.

The apparatus 3400 may include one or more processors 3410. The processor 3410 may allow the apparatus 3400 to implement the method described in the foregoing method embodiments. The processor 3410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 3400 may further include one or more memories 3420. The memory 3420 stores a program that may be executed by the processor 3410 to cause the processor 3410 to perform the method described in the foregoing method embodiments. The memory 3420 may be separate from the processor 3410 or may be integrated into the processor 3410.

The apparatus 3400 may further include a transceiver 3430. The processor 3410 may communicate with another device or chip through a transceiver 3430. For example, the processor 3410 may transmit data to and receive data from the another device or chip through the transceiver 3430.

An embodiment of this application further provides a computer-readable storage medium for storing a program. The computer-readable storage medium may be applied to the terminal or the network device provided in embodiments of this application, and the program causes a computer to perform the methods performed by the terminal or the network device in various embodiments of this application.

An embodiment of this application further provides a computer program product. The computer program product includes a program. The computer program product may be applied to the terminal or the network device provided in embodiments of this application, and the program causes a computer to perform the methods performed by the terminal or the network device in various embodiments of this application.

An embodiment of this application further provides a computer program. The computer program may be applied to the terminal or the network device provided in embodiments of this application, and the computer program causes a computer to perform the methods performed by the terminal or the network device in various embodiments of this application.

It should be understood that the terms "system" and "network" in this application may be used interchangeably. In addition, the terms used in this application are only used to illustrate specific embodiments of this application, but are not intended to limit this application. The terms "first", "second", "third", "fourth", and the like in the specification, claims, and accompanying drawings of this application are used for distinguishing different objects from each other, rather than defining a specific order. In addition, the terms "include" and "have" and any variations thereof are intended to cover a non-exclusive inclusion.

In embodiments of this application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of this application, "B corresponding to A" means that B is associated with A, and B may be determined based on A. However, it should also be understood that, determining B based on A does not mean determining B based only on A, but instead B may be determined based on A and/or other information.

In embodiments of this application, the term "corresponding" may mean that there is a direct or indirect correspondence between two elements, or that there is an association between two elements, or that there is a relationship of "indicating" and "being indicated", "configuring" and "being configured", or the like.

In embodiments of this application, the "predefined" or "pre-configured" may be implemented by pre-storing corresponding code, tables, or other forms that may be used to indicate related information in devices (for example, including a terminal device and a network device), and a specific implementation thereof is not limited in this application. For example, predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In the embodiments of this application, the "include" may refer to direct inclusion, or may refer to indirect inclusion. Optionally, the term "include" mentioned in the embodiments of this application may be replaced with "indicate" or "be used to determine". For example, A including B may be replaced with that A indicates B, or A is used to determine B.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that, the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communications connections may be implemented as indirect couplings or communications connections through some interfaces, apparatuses or units, and may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objective of the solutions of the embodiments.

In addition, function units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (digital subscriber line, DSL)) manner or a wireless (such as infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

**Claims**

1. A wireless communication method, comprising:
   in a case that a terminal device fails to perform listen-before-talk LBT in some or all of resource block RB sets in a first sidelink synchronization signal block S-SSB slot, performing, by the terminal device, a first operation.

2. The method according to claim 1, further comprising:
   performing, by the terminal device, LBT preferentially in a target RB set in the first S-SSB slot.

3. The method according to claim 2, wherein a frequency domain location of the target RB set is configured, pre-configured, or preset by a network device.

4. The method according to claim 2 or 3, wherein

   the failing to perform LBT in some or all of RB sets in a first S-SSB slot comprises: failing to perform LBT in the target RB set in the first S-SSB slot;
   wherein the first operation comprises: performing LBT in one or more RB sets other than the target RB set in the first S-SSB slot.

5. The method according to any one of claims 2 to 4, wherein

   the failing to perform LBT in some or all of RB sets in a first S-SSB slot comprises: failing to perform LBT in the target RB set in the first S-SSB slot;
   wherein the first operation comprises: performing LBT in a second S-SSB slot,
   wherein the second S-SSB slot is associated with the first S-SSB slot.

6. The method according to claim 5, wherein the performing LBT in a second S-SSB slot comprises:
   performing LBT preferentially in a target RB set in the second S-SSB slot.

7. The method according to claim 5 or 6, wherein the first S-SSB slot belongs to a first S-SSB slot set, the second S-SSB slot is associated with the first S-SSB slot set, and the failing to perform LBT in some or all of RB sets in a first S-SSB slot comprises:

   failing to perform LBT in some or all of RB sets in each S-SSB slot in the first S-SSB slot set; or
   failing to perform LBT in some or all of RB sets in any one of S-SSB slots in the first S-SSB slot set.

8. The method according to claim 7, wherein the failing to perform LBT in some or all of RB sets in each S-SSB slot comprises: failing to perform LBT in a target RB set in each S-SSB slot.

9. The method according to claim 7 or 8, wherein the second S-SSB slot belongs to a second S-SSB slot set, and the performing LBT in a second S-SSB slot comprises: performing LBT in one or more S-SSB slots in the second S-SSB slot set.

10. The method according to claim 9, wherein the first S-SSB slot set and the second S-SSB slot set belong to a same S-SSB synchronization period.

11. The method according to claim 10, wherein the first S-SSB slot set and the second S-SSB slot set form an S-SSB slot set group, and the same S-SSB synchronization period comprises P S-SSB slot set groups, wherein P is a positive integer.

12. The method according to any one of claims 9 to 11, wherein

   the first S-SSB slot set comprises first type of S-SSB slots; or
   the first S-SSB slot set comprises first type of S-SSB slots and second type of S-SSB slots; and
   the second S-SSB slot set comprises second type of S-SSB slots,
   wherein the second type of S-SSB slots are supplementary candidate slots for the first type of S-SSB slots.

13. The method according to any one of claims 5 to 12, wherein

   the first S-SSB slot is a first type of S-SSB slot or a second type of S-SSB slot; and
   the second S-SSB slot is the second type of S-SSB slot,
   wherein the second type of S-SSB slot is a supplementary candidate slot for the first type of S-SSB slot.

14. The method according to claim 13, wherein one or more of following parameters are configured, pre-configured, or preset by a network device:

a first interval, used to indicate an interval between first type of S-SSB slots;
a second interval, used to indicate an interval between a first type of S-SSB slot and a second type of S-SSB slot corresponding to the first type of S-SSB slot; or
a third interval, used to indicate an interval between a plurality of second type of S-SSB slots corresponding to a same first type of S-SSB slot.

15. The method according to any one of claims 5 to 14, wherein the first S-SSB slot and the second S-SSB slot belong to a same S-SSB synchronization period.

16. The method according to any one of claims 1 to 15, wherein the performing, by the terminal device, a first operation comprises:
performing, by the terminal device, the first operation based on one or more of following information:

a scenario where the terminal device is located; or
a type of a service performed by the terminal device.

17. The method according to any one of claims 1 to 16, wherein the first S-SSB slot belongs to a first S-SSB synchronization period, and in a case in which the first S-SSB synchronization period comprises a channel occupancy time COT, the method further comprises:
performing, by the terminal device, LBT in a first RB set comprised in the COT.

18. The method according to claim 17, wherein the first RB set is a configured or pre-configured RB set where no S-SSB is transmitted.

19. The method according to claim 17 or 18, wherein the performing, by the terminal device, LBT in a first RB set comprised in the COT comprises:
performing, by the terminal device, LBT in all RB sets comprised in the COT.

20. The method according to any one of claims 17 to 19, wherein the first RB set belongs to a first bandwidth part BWP, and the performing, by the terminal device, LBT in a first RB set comprised in the COT comprises:
performing, by the terminal device, LBT in all RB sets comprised in the first BWP.

21. The method according to any one of claims 1 to 20, further comprising:

in a case that the terminal device successfully performs LBT in Y RB sets in the first S-SSB slot, transmitting, by the terminal device, S-SSBs in some or all of the Y RB sets by using a first power,
wherein the first power is a sum of transmit powers for transmitting S-SSBs in all of the Y RB sets, and Y is an integer greater than 1.

22. The method according to claim 21, wherein the transmitting, by the terminal device, S-SSBs in some or all of the Y RB sets by using a first power comprises:

in a case in which the first power is less than or equal to a maximum transmit power limit, transmitting, by the terminal device, S-SSBs in all of the Y RB sets; and/or
in a case in which the first power is greater than or equal to the maximum transmit power limit, transmitting, by the terminal device, S-SSBs in some of the Y RB sets,
wherein a sum of transmit powers for transmitting S-SSBs in some of the Y RB sets is less than or equal to the maximum transmit power limit.

23. The method according to claim 21 or 22, wherein the transmitting, by the terminal device, S-SSBs in some of the Y RB sets comprises:

transmitting, by the terminal device, an S-SSB preferentially in an RB set with a higher priority in the Y RB sets, wherein the priority is related to one or more of following information about the RB set:

whether the RB set is a target RB set; or

34

whether the RB set belongs to a COT.

24. The method according to claim 23, wherein the priority satisfies one or more of following:

a priority of a target RB set is higher than a priority of a non-target RB set;
a priority of a target RB set is higher than a priority of an RB set that belongs to a COT; or
a priority of an RB set that belongs to a COT is higher than a priority of an RB set that does not belong to the COT.

25. A wireless communication method, comprising:

transmitting, by a network device, configuration information to a terminal device,
wherein the configuration information is used to configure one or more of following information:

first information, used to indicate a frequency domain location of a target resource block RB set, wherein the target RB set is an RB set, in which the terminal device preferentially performs listen-before-talk LBT, in an S-SSB slot;
a first interval, used to indicate an interval between a first type of synchronization signal block S-SSB slots;
a second interval, used to indicate an interval between a first type of S-SSB slot and a second type of S-SSB slot, and the second type of S-SSB slot is a supplementary candidate slot for the first type of S-SSB slot; or
a third interval, used to indicate an interval between a plurality of second type of S-SSB slots corresponding to a same first type of S-SSB slot.

26. A terminal device, comprising:
an execution unit, configured to: in a case that a terminal device fails to perform listen-before-talk LBT in some or all of resource block RB sets in a first sidelink synchronization signal block S-SSB slot, perform a first operation.

27. The terminal device according to claim 26, wherein the terminal device is further configured to:
preferentially perform LBT in a target RB set in the first S-SSB slot.

28. The terminal device according to claim 27, wherein a frequency domain location of the target RB set is configured, pre-configured, or preset by a network device.

29. The terminal device according to claim 27 or 28, wherein

the failing to perform LBT in some or all of RB sets in a first S-SSB slot comprises: failing to perform LBT in the target RB set in the first S-SSB slot;
wherein the first operation comprises: performing LBT in one or more RB sets other than the target RB set in the first S-SSB slot.

30. The terminal device according to any one of claims 27 to 29, wherein

the failing to perform LBT in some or all of RB sets in a first S-SSB slot comprises: failing to perform LBT in the target RB set in the first S-SSB slot;
wherein the first operation comprises: performing LBT in a second S-SSB slot,
wherein the second S-SSB slot is associated with the first S-SSB slot.

31. The terminal device according to claim 30, wherein the performing LBT in a second S-SSB slot comprises:
performing LBT preferentially in a target RB set in the second S-SSB slot.

32. The terminal device according to claim 30 or 31, wherein the first S-SSB slot belongs to a first S-SSB slot set, the second S-SSB slot is associated with the first S-SSB slot set, and the failing to perform LBT in some or all of RB sets in a first S-SSB slot comprises:

failing to perform LBT in some or all of RB sets in each S-SSB slot in the first S-SSB slot set; or
failing to perform LBT in some or all of RB sets in any one of S-SSB slots in the first S-SSB slot set.

33. The terminal device according to claim 32, wherein the failing to perform LBT in some or all of RB sets in each S-SSB slot comprises: failing to perform LBT in a target RB set in each S-SSB slot.

34. The terminal device according to claim 32 or 33, wherein the second S-SSB slot belongs to a second S-SSB slot set, and the performing LBT in a second S-SSB slot comprises: performing LBT in one or more S-SSB slots in the second S-SSB slot set.

35. The terminal device according to claim 34, wherein the first S-SSB slot set and the second S-SSB slot set belong to a same S-SSB synchronization period.

36. The terminal device according to claim 35, wherein the first S-SSB slot set and the second S-SSB slot set form an S-SSB slot set group, and the same S-SSB synchronization period comprises P S-SSB slot set groups, wherein P is a positive integer.

37. The terminal device according to any one of claims 34 to 36, wherein

the first S-SSB slot set comprises first type of S-SSB slots; or
the first S-SSB slot set comprises first type of S-SSB slots and second type of S-SSB slots; and
the second S-SSB slot set comprises second type of S-SSB slots,
wherein the second type of S-SSB slots are supplementary candidate slots for the first type of S-SSB slots.

38. The terminal device according to any one of claims 30 to 37, wherein

the first S-SSB slot is a first type of S-SSB slot or a second type of S-SSB slot; and
the second S-SSB slot is the second type of S-SSB slot,
wherein the second type of S-SSB slot is a supplementary candidate slot for the first type of S-SSB slot.

39. The terminal device according to claim 38, wherein one or more of following parameters are configured, pre-configured, or preset by a network device:

a first interval, used to indicate an interval between first type of S-SSB slots;
a second interval, used to indicate an interval between a first type of S-SSB slot and a second type of S-SSB slot corresponding to the first type of S-SSB slot; or
a third interval, used to indicate an interval between a plurality of second type of S-SSB slots corresponding to a same first type of S-SSB slot.

40. The terminal device according to any one of claims 30 to 39, wherein the first S-SSB slot and the second S-SSB slot belong to a same S-SSB synchronization period.

41. The terminal device according to any one of claims 26 to 40, wherein the execution unit is configured to:
perform the first operation based on one or more of following information:

a scenario where the terminal device is located; or
a type of a service performed by the terminal device.

42. The terminal device according to any one of claims 26 to 41, wherein the first S-SSB slot belongs to a first S-SSB synchronization period, and in a case in which the first S-SSB synchronization period comprises a channel occupancy time COT, the terminal device is further configured to:
perform LBT in a first RB set comprised in the COT.

43. The terminal device according to claim 42, wherein the first RB set is a configured or pre-configured RB set where no S-SSB is transmitted.

44. The terminal device according to claim 42 or 43, wherein the performing LBT in a first RB set comprised in the COT comprises:
performing LBT in all RB sets comprised in the COT.

45. The terminal device according to any one of claims 42 to 44, wherein the first RB set belongs to a first bandwidth part BWP, and the performing LBT in a first RB set comprised in the COT comprises:
performing LBT in all RB sets comprised in the first BWP.

46. The terminal device according to any one of claims 26 to 45, wherein the terminal device is further configured to:

in a case that the terminal device successfully performs LBT in Y RB sets in the first S-SSB slot, transmit S-SSBs in some or all of the Y RB sets by using a first power,
wherein the first power is a sum of transmit powers for transmitting S-SSBs in all of the Y RB sets, and Y is an integer greater than 1.

47. The terminal device according to claim 46, wherein the transmitting S-SSBs in some or all of the Y RB sets by using a first power comprises:

in a case in which the first power is less than or equal to a maximum transmit power limit, transmitting S-SSBs in all of the Y RB sets; and/or
in a case in which the first power is greater than or equal to the maximum transmit power limit, transmitting S-SSBs in some of the Y RB sets,
wherein a sum of transmit powers for transmitting S-SSBs in some of the Y RB sets is less than or equal to the maximum transmit power limit.

48. The terminal device according to claim 46 or 47, wherein the transmitting S-SSBs in some of the Y RB sets comprises:

transmitting an S-SSB preferentially in an RB set with a higher priority in the Y RB sets,
wherein the priority is related to one or more of following information about the RB set:

whether the RB set is a target RB set; or
whether the RB set belongs to a COT.

49. The terminal device according to claim 48, wherein the priority satisfies one or more of following:

a priority of a target RB set is higher than a priority of a non-target RB set;
a priority of a target RB set is higher than a priority of an RB set that belongs to a COT; or
a priority of an RB set that belongs to a COT is higher than a priority of an RB set that does not belong to the COT.

50. A network device, comprising:

a transmitting unit, configured to transmit configuration information to a terminal device,
wherein the configuration information is used to configure one or more of following information:

first information, used to indicate a frequency domain location of a target resource block RB set, wherein the target RB set is an RB set, in which the terminal device preferentially performs listen-before-talk LBT, in an S-SSB slot;
a first interval, used to indicate an interval between a first type of synchronization signal block S-SSB slots;
a second interval, used to indicate an interval between a first type of S-SSB slot and a second type of S-SSB slot, and the second type of S-SSB slot is a supplementary candidate slot for the first type of S-SSB slot; or
a third interval, used to indicate an interval between a plurality of second type of S-SSB slots corresponding to a same first type of S-SSB slot.

51. A terminal device, comprising a memory and a processor, wherein the memory is configured to store a program, and the processor is configured to invoke the program in the memory, to cause the terminal device to execute the method according to any one of claims 1 to 24.

52. A network device, comprising a memory and a processor, wherein the memory is configured to store a program, and the processor is configured to invoke the program in the memory, to cause the network device to execute the method according to claim 25.

53. An apparatus, comprising a processor configured to invoke a program from a memory, to cause the apparatus to execute the method according to any one of claims 1 to 25.

54. A chip, comprising a processor configured to invoke a program from a memory, to cause a device installed with the chip to execute the method according to any one of claims 1 to 25.

**55.** A computer-readable storage medium, wherein the computer-readable storage medium stores a program, and the program causes a computer to execute the method according to any one of claims 1 to 25.

**56.** A computer program product, comprising a program, wherein the program causes a computer to execute the method according to any one of claims 1 to 25.

**57.** A computer program, wherein the computer program causes a computer to execute the method according to any one of claims 1 to 25.

FIG. 1

Sidelink communication

FIG. 2

110

120a

Sidelink
communication

120b

FIG. 3

120b

Sidelink
communication

120b

FIG. 4

120b

Resource allocation

Resource allocation

120b

120b

Sidelink
communication

FIG. 5

FIG. 6

FIG. 7

FIG. 8

(a)

(b)

FIG. 9

FIG. 10

| AGC | DMRS and second-stage SCI | PSCCH | Second-stage SCI | | | DMRS | PSSCH (Data portion) | | | | DMRS | | GP |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

FIG. 11

| | Symbol#0 | Symbol#1 | Symbol#2 |
|---|---|---|---|
| RE#11 | | | |
| RE#10 | | | |
| RE#9 | Reference signal | Reference signal | Reference signal |
| RE#8 | | | |
| RE#7 | | | |
| RE#6 | | | |
| RE#5 | Reference signal | Reference signal | Reference signal |
| RE#4 | | | |
| RE#3 | | | |
| RE#2 | | | |
| RE#1 | Reference signal | Reference signal | Reference signal |
| RE#0 | | | |

FIG. 12

| AGC | DMRS | PSCCH | | DMRS | | | DMRS | | | DMRS | | | GP |
|---|---|---|---|---|---|---|---|---|---|---|---|---|---|
| 0 | 1 | 2 | 3 | 4 | 5 | 6 | 7 | 8 | 9 | 10 | 11 | 12 | 13 |

FIG. 13

| RE #0 | RE #1 | RE #2 | RE #3 | RE #4 | RE #5 | RE #6 | RE #7 | RE #8 | RE #9 | RE #10 | RE #11 |
|---|---|---|---|---|---|---|---|---|---|---|---|
| Port 0/Port 1 | | Port 0/Port 1 | | Port 0/Port 1 | | Port 0/Port 1 | | Port 0/Port 1 | | Port 0/Port 1 | |

FIG. 14

FIG. 15

FIG. 16

FIG. 17

FIG. 18

FIG. 19A

FIG. 19B

FIG. 20

Terminal device → Network device

S2103: Configuration information

S2110: In a case that a terminal device fails to perform LBT in some or all of RB sets in a first S-SSB slot, perform a first operation

FIG. 21

| RB set 3 | No S-SSB is transmitted | | |
| RB set 2 | LBT failure | S-SSB / S-SSB / S-SSB | Decide, based on UE implementation, whether to attempt to transmit S-SSBs in slots s3 and s4 |
| Target RB set — RB set 1 | LBT failure | S-SSB / S-SSB / S-SSB | |
| RB set 0 | LBT failure | S-SSB / S-SSB / S-SSB | |

Frequency domain

S-SSB · S-SSB · S-SSB · S-SSB

Slot s1 · Slot s2 · Slot s3 · Slot s4

Time domain

FIG. 22

RB set 3 | No S-SSB is transmitted

RB set 2 | LBT failure

Target RB set | RB set 1 | S-SSB / S-SSB / S-SSB | Decide, based on UE implementation, whether to attempt to transmit S-SSBs in slots s2, s3, and s4

RB set 0 | LBT failure

Frequency domain

S-SSB | S-SSB | S-SSB | S-SSB

Slot s1 | Slot s2 | Slot s3 | Slot s4

Time domain

**FIG. 23**

RB set 3 | No S-SSB is transmitted

RB set 2 | LBT failure | S-SSB / S-SSB / S-SSB

Target RB set | RB set 1 | LBT failure | S-SSB / S-SSB / S-SSB | Decide, based on UE implementation, whether to attempt to transmit S-SSBs in slots s3 and s4

RB set 0 | S-SSB / S-SSB / S-SSB | S-SSB / S-SSB / S-SSB

Frequency domain

S-SSB | S-SSB | S-SSB | S-SSB

Slot s1 | Slot s2 | Slot s3 | Slot s4

Time domain

**FIG. 24**

FIG. 25

First type of S-SSB slot

Second type of S-SSB slot

FIG. 26A

First type of S-SSB slot

Second type of S-SSB slot

Interval
Interval    Interval  G1        Interval   Interval  G1       Interval   Interval  G1       Interval   Interval
G12         G2                  G12        G2                 G12        G2                 G12        G2

FIG. 26B

First type of
S-SSB

Second type of
S-SSB

Interval G1

Interval G2

Interval G2

FIG. 26C

RB set 3 | No S-SSB is transmitted

RB set 2 | S-SSB / S-SSB / S-SSB

COT 1

Target RB set — RB set 1 | S-SSB / S-SSB / S-SSB

RB set 0 | S-SSB / S-SSB / S-SSB

Frequency domain

Decide, based on UE implementation, whether to attempt to transmit S-SSBs in slots s2, s3, and s4

S-SSB — Slot s1
S-SSB — Slot s2
S-SSB — Slot s3
S-SSB — Slot s4

Time domain

**FIG. 27**

RB set 3 | No S-SSB is transmitted

RB set 2 | S-SSB / S-SSB / S-SSB

Target RB set — RB set 1 | S-SSB / S-SSB / S-SSB

RB set 0 | S-SSB / S-SSB / S-SSB

Frequency domain

Decide, based on UE implementation, whether to attempt to transmit an S-SSB in a slot s2

COT 1

S-SSB / S-SSB / S-SSB / S-SSB / S-SSB / S-SSB

Decide, based on UE implementation, whether to attempt to transmit an S-SSB in a slot s4

S-SSB — Slot s1
S-SSB — Slot s2
S-SSB — Slot s3
S-SSB — Slot s4

Time domain

**FIG. 28**

RB set 3 | S-SSB | S-SSB | S-SSB

No S-SSB is transmitted

COT 1

RB set 2 | S-SSB | S-SSB | S-SSB

Target RB set | RB set 1 | S-SSB | S-SSB | S-SSB

Decide, based on UE implementation, whether to attempt to transmit S-SSBs in slots s2, s3, and s4

RB set 0 | S-SSB | S-SSB | S-SSB

Frequency domain

S-SSB — Slot s1

S-SSB — Slot s2

S-SSB — Slot s3

S-SSB — Slot s4

Time domain

FIG. 29

COT 1

RB set 3 | No S-SSB is transmitted | S-SSB | S-SSB | S-SSB | No S-SSB is transmitted

RB set 2 | S-SSB | S-SSB | S-SSB

Decide, based on UE implementation, whether to attempt to transmit an S-SSB in a slot s2

S-SSB | S-SSB | S-SSB

Target RB set | RB set 1 | S-SSB | S-SSB | S-SSB

S-SSB | S-SSB | S-SSB

Decide, based on UE implementation, whether to attempt to transmit an S-SSB in a slot s4

RB set 0 | S-SSB | S-SSB | S-SSB

S-SSB | S-SSB | S-SSB

Frequency domain

S-SSB — Slot s1

S-SSB — Slot s2

S-SSB — Slot s3

S-SSB — Slot s4

Time domain

FIG. 30

COT 1

| RB set 3 | No S-SSB is transmitted | | S-SSB S-SSB S-SSB | S-SSB S-SSB S-SSB |
| RB set 2 | S-SSB S-SSB S-SSB | Decide, based on UE implementation, whether to attempt to transmit an S-SSB in a slot s2 | S-SSB S-SSB S-SSB | S-SSB S-SSB S-SSB |

Target RB set — RB set 1: S-SSB S-SSB S-SSB

| RB set 0 | S-SSB S-SSB S-SSB | | S-SSB S-SSB S-SSB | S-SSB S-SSB S-SSB |

Frequency domain ↑

S-SSB (Slot s1)   S-SSB (Slot s2)   S-SSB (Slot s3)   S-SSB (Slot s4)

Time domain →

**FIG. 31**

Terminal device
3200

Execution unit 3210

**FIG. 32**

Network device
3300

Transmitting unit
3310

**FIG. 33**

FIG. 34

## INTERNATIONAL SEARCH REPORT

| International application No. |
|---|
| **PCT/CN2023/112158** |

**A. CLASSIFICATION OF SUBJECT MATTER**

H04W 74/08(2024.01)i; H04W 56/00(2009.01)i; H04W72/25(2023.01)i

According to International Patent Classification (IPC) or to both national classification and IPC

**B. FIELDS SEARCHED**

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNTXT, CNKI, WPABSC, ENTXTC, VEN, ENTXT, 3GPP: 侧行, 侧链路, 同步信号块, 先听后说, 失败, 终端, 时隙, 间隔, 发送, 功率, sidelink, SSB, S-SSB, listen before talk, LBT, failure, terminal, slot, interval, transmit, power

**C. DOCUMENTS CONSIDERED TO BE RELEVANT**

| Category* | Citation of document, with indication, where appropriate, of the relevant passages | Relevant to claim No. |
|---|---|---|
| X | CN 115669172 A (GUANGDONG OPPO MOBILE TELECOMMUNICATIONS CORP., LTD.) 31 January 2023 (2023-01-31) description, paragraphs [0143]-[0296], and figure 6 | 1-20, 25-45, 50-57 |
| A | CN 115669172 A (GUANGDONG OPPO MOBILE TELECOMMUNICATIONS CORP., LTD.) 31 January 2023 (2023-01-31) entire document | 21-24, 46-49 |
| X | CN 115250528 A (BEIJING UNISOC COMMUNICATIONS TECHNOLOGY CO., LTD.) 28 October 2022 (2022-10-28) description, paragraphs [0054]-[0091] | 1-3, 16-20, 25-28, 41-45, 50-57 |
| A | CN 115250528 A (BEIJING UNISOC COMMUNICATIONS TECHNOLOGY CO., LTD.) 28 October 2022 (2022-10-28) entire document | 4-15, 21-24, 29-40, 46-49 |
| A | US 2023064680 A1 (ASUSTEK COMPUTER INC.) 02 March 2023 (2023-03-02) entire document | 1-57 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 April 2024** | **07 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/112158** |

| C. | DOCUMENTS CONSIDERED TO BE RELEVANT | |
|---|---|---|
| Category* | Citation of document, with indication, where appropriate, of the relevant passages | Relevant to claim No. |
| A | NEC. "LBT Failure Detection and Recovery Procedure for SL-U" *3GPP TSG-RAN WG2 #121, R2-2300989,* 17 February 2023 (2023-02-17), entire document | 1-57 |

Form PCT/ISA/210 (second sheet) (July 2022)

**INTERNATIONAL SEARCH REPORT**
Information on patent family members

| International application No. |
| PCT/CN2023/112158 |

| Patent document cited in search report | | | Publication date (day/month/year) | Patent family member(s) | | | Publication date (day/month/year) |
|---|---|---|---|---|---|---|---|
| CN | 115669172 | A | 31 January 2023 | WO | 2021237607 | A1 | 02 December 2021 |
| | | | | EP | 4161203 | A1 | 05 April 2023 |
| | | | | US | 2023121866 | A1 | 20 April 2023 |
| CN | 115250528 | A | 28 October 2022 | | None | | |
| US | 2023064680 | A1 | 02 March 2023 | KR | 20230025366 | A | 21 February 2023 |

Form PCT/ISA/210 (patent family annex) (July 2022)